(19) Europäisches Patentamt
European Patent Office
Office européen des brevets

(11) EP 2 769 964 A1

(12) EUROPÄISCHE PATENTANMELDUNG

(43) Veröffentlichungstag:
**27.08.2014 Patentblatt 2014/35**

(51) Int Cl.:
***C04B 24/26*** *(2006.01)* ***C04B 28/02*** *(2006.01)*
***C08F 290/06*** *(2006.01)*

(21) Anmeldenummer: **13156752.1**

(22) Anmeldetag: **26.02.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Construction Research & Technology GmbH**
**83308 Trostberg (DE)**

(72) Erfinder:
- **Gädt, Torben**
  **83278 Traunstein (DE)**
- **Grassl, Harald**
  **84550 Feichten (DE)**
- **Kraus, Alexander**
  **83132 Pittenhart (DE)**
- **Nicoleau, Luc**
  **83352 Altenmarkt an der Alz (DE)**
- **Winklbauer, Martin**
  **84553 Halsbach (DE)**

(74) Vertreter: **Reitstötter Kinzebach**
**Patentanwälte**
**Sternwartstrasse 4**
**81679 München (DE)**

# (54) Additiv für hydraulisch abbindende Massen

(57) Die vorliegende Erfindung betrifft ein Additiv für hydraulisch abbindende Massen, umfassend eine wässrige kolloid-disperse Zubereitung wenigstens eines wasserlöslichen Salzes eines mehrwertigen Metallkations, wenigstens einer Verbindung, die ein Anion freizusetzen vermag, das mit dem mehrwertigen Metallkation ein schwerlösliches Salz bildet, und wenigstens eines polymeren Dispergiermittels, das anionische und/oder anionogene Gruppen und Polyetherseitenketten umfasst.

EP 2 769 964 A1

## Beschreibung

Die Erfindung betrifft ein Additiv für hydraulisch abbindende Massen, das insbesondere als Konsistenzhalter (Slump-retainer) geeignet ist.

Hydraulisch abbindende Massen, die wässrige Aufschlämmungen von hydraulischem und/oder mineralischem Bindemittel mit pulverförmigen anorganischen und/oder organischen Substanzen, wie Tonen, Silikatmehlen, Kreiden, Rußen, oder Gesteinsmehlen enthalten, finden zum Beispiel in Form von Betonen, Mörteln oder Gipsen breite Anwendung.

Es ist bekannt, dass hydraulisch abbindende Massen zur Verbesserung ihrer Verarbeitbarkeit, das heißt Knetbarkeit, Streichfähigkeit, Spritzbarkeit, Pumpbarkeit oder Fließfähigkeit, Additive, die polymere Dispergiermittel umfassen, zugesetzt werden. Derartige Additive können die Bildung von Feststoffagglomeraten verhindern, bereits vorhandene und durch Hydratation neu gebildete Teilchen dispergieren und auf diese Weise die Verarbeitbarkeit verbessern. Additive, die polymere Dispergiermittel umfassen, werden insbesondere auch gezielt bei der Herstellung von hydraulisch abbindenden Massen, die hydraulische und/oder mineralische Bindemittel wie (Portland)zement, Hüttensand, Flugasche, Silikastaub, Metakaolin, natürliche Puzzolane, gebrannten Ölschiefer, Calcium-Aluminat-Zement, Kalk, Gips, Halbhydrat, Anhydrit oder Mischungen zweier oder mehrerer dieser Komponenten enthalten, eingesetzt.

Um diese hydraulisch abbindenden Massen auf der Basis der genannten Bindemittel in eine gebrauchsfertige, verarbeitbare Form zu überführen, ist in der Regel wesentlich mehr Anmachwasser erforderlich, als für den nachfolgenden Erhärtungsprozess notwendig wäre. Im Betonkörper verringern die durch das überschüssige, später verdunstende Wasser gebildeten Hohlräume die mechanische Festigkeit und Beständigkeit.

Um den Anteil überschüssigen Wassers bei einer vorgegebenen Verarbeitungskonsistenz zu reduzieren und/oder die Verarbeitbarkeit bei einem vorgegebenen Wasser/Bindemittel-Verhältnis zu verbessern, werden Additive eingesetzt, die im Allgemeinen als Wasserreduktionsmittel oder Fließmittel bezeichnet werden. Als Wasserreduktions- oder Fließmittel werden in der Praxis insbesondere durch radikalische Polymerisation erhaltene, auf carboxylgruppenhaltigen Monomeren und auf polyethylenglykolhaltigen olefinischen Monomeren basierende Polymere eingesetzt, die auch als Polycarboxylatether (abgekürzt als "PCE") bezeichnet werden. Diese Polymere weisen eine carboxylgruppenhaltige Hauptkette mit polyethylenglykolhaltigen Seitenketten auf und werden auch als Kammpolymere bezeichnet.

Von den Wasserreduktions- und Fließmitteln, die bei relativ geringer Dosierung eine Verflüssigung frisch angesetzten Betons bewirken, grenzt man die sogenannten Konsistenzhalter, bzw. Setzmaßaufrechterhalter, die im folgenden als "Slump-retainer" bezeichnet werden, ab, die nur bei relativ hoher Dosierung die gleiche anfängliche Verflüssigung erreichen, aber ein konstantes Ausbreitmaß über die Zeit bewirken. Im Gegensatz zur Zugabe von Wasserreduktionsmitteln ermöglicht die Zugabe von Slump-retainern eine auf beispielsweise bis zu 90 Minuten nach dem Anmischen des Betons ausgedehnte, gute Verarbeitbarkeit, während die Verarbeitbarkeit mit Wasserreduktionsmitteln meist schon nach 10 bis 30 Minuten deutlich abnimmt.

Charakteristisch ist für die bisher im Stand der Technik bekannten Kammpolymere, dass in Abhängigkeit von einigen polymerspezifischen Parametern gezielt ein Wasserreduktionsmittel oder auch ein Slump-retainer erzeugt werden kann. Diese polymerspezifischen Parameter umfassen die Anzahl der Carboxylgruppen oder sonstiger Säuregruppen, die Anzahl und Länge der Polyethylenglykolseitenketten und das Molekulargewicht. Eine Einstellung zwischen Wasserreduktions- und Setzmaßaufrechterhaltungs-Effekt durch eine entsprechende Auswahl vorstehend genannter polymerspezifischer Parameter ist allerdings nur a priori durch synthetische, bzw. polymerisationstechnische Maßnahmen im Labor oder in einer chemischen Produktionsanlage möglich. Dabei werden meist entsprechende Typen von Säuremonomeren und polyethylenglykolhaltigen Makromonomeren in gewissen Molverhältnissen ausgewählt und polymerisiert. Durch die Festlegung im Produktionsprozess ist eine Umpolung eines Wasserreduktionsmittels zu einem Slump-retainer oder umgekehrt nach dem Stand der Technik am Ort der Betonverarbeitung nicht möglich.

Meist werden in der Praxis Wasserreduktionsmittel und Slump-retainer in Formulierungen in wechselnden Anteilen eingesetzt. Allerdings ist es durch formulierungstechnische Maßnahmen nur sehr eingeschränkt möglich die Aufrechterhaltung des Setzmaßes (Slumpretention) zu verbessern, insbesondere ist es schwierig die Aufrechterhaltung des Setzmaßes zu verbessern ohne dabei weitere Betoneigenschaften nachteilig zu beeinflussen. So führt eine Formulierung mit Slump-retainern zwar zu einem besseren Slumperhalt, wie beispielsweise in WO 2009/004348 im Zusammenhang mit Phosphonaten und in JP 57067057A im Zusammenhang mit Zuckern offenbart ist. Allerdings gewinnt man die Aufrechterhaltung des Setzmaßes nur auf Kosten schlechterer Frühfestigkeiten.

Im Stand der Technik sind als weitere Methoden zur Aufrechterhaltung des Setzmaßes einer zementären Bindemitteldispersion über die Zeit bekannt:

Die Verwendung von Hochleistungsfließmitteln auf Polycarboxylatetherbasis mit hydrolysierbaren Acrylsäureestern, sogenannte "dynamische Superverflüssiger", wie sie in der EP 1 136 508 A1 und WO 2010/029117 beschrieben sind. Diese Technologie ermöglicht die zeitlich kontrollierte Adsorption der Fließmittelpolymere auf den Zementkornoberflächen, wobei durch Hydrolyse entsprechender Carbonsäurederivate (bspw. Acrylsäureester) im alkalischen Medium Beton die Aufrechterhaltung des Setzmaßes verbessert wird. Auch die Eigenschaften "dynamischer Superverflüssiger"

werden durch synthetische, bzw. polymerisationstechnische Maßnahmen im Labor oder in einer chemischen Produktionsanlage festgelegt und sind am Ort der Betonverarbeitung nicht flexibel einstellbar.

Weiterhin werden vernetzte Polycarboxylatether eingesetzt, welche durch Monomere mit mehr als einer polymerisierbaren Funktion, wie beispielsweise Di(meth)acrylate, vernetzt sind. Unter den stark basischen Bedingungen des zementären Porenwassers hydrolysieren die vernetzenden Struktureinheiten, die Vernetzung wird aufgehoben und das als Fließmittel wirksame unvernetzte (Co)polymer wird über die Zeit freigesetzt (WO2000/048961). Auch die Eigenschaften dieser vernetzten Polycarboxylatether werden durch synthetische, bzw. polymerisationstechnische Maßnahmen im Labor oder in einer chemischen Produktionsanlage festgelegt und sind am Ort der Betonverarbeitung nicht flexibel einstellbar. Außerdem besteht die Gefahr einer unbeabsichtigten vorzeitigen Hydrolyse bei der Lagerung der Produkte.

In der US7879146 B2 wird die Herstellung von Doppelschicht-Hydroxiden basierend auf zweiwertigen Metallkationen (bspw. $Ni^{2+}$, $Zn^{2+}$, $Mn^{2+}$ und/oder $Ca^{2+}$ und dreiwertigen Metallkationen (bspw. $Al^{3+}$, $Ga^{3+}$, $Fe^{3+}$ und/oder $Cr^{3+}$) offenbart. Die Doppelschicht-Hydroxide können Anionen wie Nitrate, Hydroxide, Carbonate, Sulfate und Chloride interkalieren. Die anorganischen Produkte werden über mehrere Stunden bei erhöhter Temperatur (65 °C) behandelt und dann im Vakuum bei 100 °C getrocknet. In die so hergestellten Doppelschicht-Hydroxide werden in einem sich anschließenden Ionenenaustauschprozess organische Moleküle wie beispielsweise Naphthalensulfonate, Derivate der Nitrobenzoesäure, Salicylsäure, Zitronensäure, Polyacrylsäuren, Polyvinylalkohol und ein Superplasticizer auf Basis eines Natriumsalzes von Polynaphthalinsulfonsäure (PNS) interkaliert. Die anorganisch durch Doppelschicht-Hydroxide modifizierten Natriumsalze der Polynaphthalinsulfonsäure (PNS) bewirken im Mörteltest nur eine leicht verbesserte Aufrechterhaltung des Setzmaßes. Diese Verbesserung ist für viele Anwendungen nicht ausreichend.

Die EP 2 412 689 beschreibt ein Nano-Hybrid-Additiv für Beton aus einem schichtförmigen Doppelhydroxid und einem Polyurethan-Copolymer, das durch Vermischen der beiden Komponenten und hydrothermale Behandlung hergestellt wird. Das Additiv soll den Chloridionen-induzierten Abbau von Unterwasserbeton und die Zersetzung von Beton durch die Anwendung von Enteisungsmitteln, wie Calciumchlorid, im Winter verhindern. Nachteilig sind die langen Synthesedauern von > 6h und die benötigten hohen Temperaturen von 80 bis 100°C bei der hydrothermalen Herstellung der Doppelschichthydroxide. Weiterhin ist man auch bei dieser Methode daran gebunden, dass die Eigenschaften des Hybrids in einer komplizierten Synthese in einer chemischen Produktionsanlage festgelegt werden.

In der Europäischen Patentanmeldung Nr. 12177399.8 ist außerdem ein Additiv zur Aufrechterhaltung des Setzmaßes beschrieben, das eine wässrige kolloid-disperse Zubereitung wenigstens eines Salzes eines mehrwertigen Metallkations und wenigstens eines polymeren Dispergiermittels umfasst, wobei das polymere Dispergiermittel anionische und/oder anionogene Gruppen und Polyetherseitenketten umfasst.

Die vielfältigen Anforderungen an das Leistungsprofil der Betone sind länderspezifischen Regulierungen und Normierungen unterworfen und stark abhängig von den an der jeweiligen Baustelle vorherrschenden Bedingungen, wie etwa den Witterungsbedingungen. Besonders die Aufrechterhaltung des Setzmaßes hängt stark von den an der jeweiligen Baustelle vorherrschenden Bedingungen ab.

Da von Baustelle zu Baustelle ganz unterschiedliche Witterungsbedingungen vorherrschen können, besteht in der Bauindustrie das Bedürfnis, die vorstehend beschriebenen Mängel des Stands der Technik zu beheben. Der Erfindung liegt daher die Aufgabe zugrunde, effiziente Slump-retainer bereitzustellen. Diese sollen in der Lage sein, unter den auf der Baustelle vorherrschenden Bedingungen eine ausreichende Aufrechterhaltung des Setzmaßes zu gewährleisten ohne andere Betoneigenschaften, wie z. B. die Frühfestigkeit, zu beeinträchtigen.

Diese Aufgabe wird gelöst durch folgende Ausführungsformen:

1. Additiv für hydraulisch abbindende Massen, umfassend eine wässrige kolloid-disperse Zubereitung wenigstens eines wasserlöslichen Salzes eines mehrwertigen Metallkations, wenigstens einer Verbindung, die ein Anion freizusetzen vermag, das mit dem mehrwertigen Metallkation ein schwerlösliches Salz bildet, und wenigstens eines polymeren Dispergiermittels, das anionische und/oder anionogene Gruppen und Polyetherseitenketten umfasst, wobei das Metallkation in solcher Menge vorliegt, dass das folgende Verhältnis nach Formel (a) größer als 0 und kleiner oder gleich 1 ist:

$$0 < \frac{\sum_i z_{K,i} \times n_{K,i}}{\sum_j z_{S,j} \times n_{S,j}} \leq 1 \quad \text{(a)}$$

und wobei

$z_{K,i}$ für den Betrag der Ladungszahl des mehrwertigen Metallkations steht,

$n_{K,i}$ für die Molzahl des mehrwertigen Metallkations steht,

$z_{S,j}$ für den Betrag der Ladungszahl der im polymeren Dispergiermittel enthaltenen anionischen und anionogenen

Gruppe steht, und
$n_{S,j}$ für die Molzahl der im polymeren Dispergiermittel enthaltenen anionischen und anionogenen Gruppe steht, die Indices i und j voneinander unabhängig und eine ganze Zahl größer als 0 sind, wobei i für die Anzahl verschiedenartiger mehrwertiger Metallkationen steht und j für die Anzahl verschiedenartiger im polymeren Dispergiermittel enthaltener anionischer und anionogener Gruppen steht.
$z_{K,i}$ ist so definiert, dass die Ladungszahl für Metallkationen sich stets auf die volle formale Ladung bezieht, d.h. $z_{Fe}(FeCl_3) = 3$, $z_{Fe}(FeCl_2) = 2$.
Die Ladungszahl $z_{S,j}$ steht für den Betrag der formalen Ladung bei maximaler Deprotonierung der im polymeren Dispergiermittel enthaltenen anionischen und anionogenen Gruppe, d.h. z. B. bei den Gruppen ($-OPO_3H_2$), ($-OPO_3H^-$), ($-OPO_3^{2-}$), ($-PO_3H_2$), ($-PO_3H^-$), und ($-PO_3^{2-}$) steht z für 2, und bei den Gruppen (-COOH) und ($-COO^-$) steht z für 1.

2. Additiv nach Ausführungsform 1, wobei das mehrwertige Metallkation ausgewählt ist unter $Al^{3+}$, $Fe^{3+}$, $Fe^{2+}$, $Zn^{2+}$, $Mn^{2+}$, $Cu^{2+}$, $Mg^{2+}$,$Ca^{2+}$, $Sr^{2+}$, $Ba^{2+}$ und Gemischen davon.

3. Additiv nach Ausführungsform 2, wobei das mehrwertige Metallkation ausgewählt ist unter $Al^{3+}$, $Fe^{3+}$, $Fe^{2+}$, $Ca^{2+}$ und Gemischen davon.

4. Additiv nach einer der vorhergehenden Ausführungsformen, wobei das mehrwertige Metallkation und das Anion in Mengen vorliegen, die nach folgenden Formeln berechnet werden:

$$0 < \frac{\sum_i z_{K,i} \times n_{K,i}}{\sum_j z_{s,j} \times n_{s,j}} \leq 1 \quad \text{(a)}$$

$$0 < \frac{\sum_l z_{A,l} \times n_{A,l}}{\sum_j z_{K,i} \times n_{K,i}} \leq 3 \quad \text{(b)}$$

wobei das Verhältnis nach Formel (b) bevorzugt zwischen 0,01 und 2, weiterhin bevorzugt zwischen 0,05 und 1,5, besonders bevorzugt zwischen 0,1 und 1,0, weiterhin besonders bevorzugt zwischen 0,15 und 0,8 und ganz besonders bevorzugt zwischen 0,2 und 0,75 liegt, und
$z_{K,i}$ für den Betrag der Ladungszahl des mehrwertigen Metallkations steht,
$n_{K,i}$ für die Molzahl des mehrwertigen Metallkations steht,
$z_{S,j}$ für Ladungszahl der im polymeren Dispergiermittel enthaltenen anionischen und anionogenen Gruppen steht,
$n_{S,j}$ für die Molzahl der im polymeren Dispergiermittel enthaltenen anionischen und anionogenen Gruppen steht,
$z_{A,l}$ für die Ladungszahl des Anions steht,
$n_{A,l}$ für die Molzahl des Anions steht,
die Indices i, j und l voneinander unabhängig und eine ganze Zahl größer als 0 sind, i für die Anzahl verschiedenartiger mehrwertiger Metallkationen steht, j für die Anzahl verschiedenartiger im polymeren Dispergiermittel enthaltener anionischer und anionogener Gruppen steht, und l für die Anzahl verschiedenartiger Anionen, welche mit dem Metallkation ein schwerlösliches Salz zu bilden vermögen, steht.
Die Ladungszahl $z_{A,l}$ steht für den Betrag der formalen Ladung bei maximaler Deprotonierung, d.h. z.B. bei den Gruppen ($H_3PO_4$) und ($Na_3PO_4$)steht $z_{PO4\ für}$ 3, oder bei ($Na_2CO_3$) steht $z_{CO3}$ für 2. Im Fall von Aluminat wird gesetzt $z_{AlO2}(NaAlO_2) = z_{AlO2}(NaAl(OH)_4) = 1$, im Fall von Silikat wird für alle Silikatspezies gesetzt $z_{SiO3}(Na_2SiO_3) = 2$.

5. Additiv nach einer der vorhergehenden Ausführungsformen, wobei das Verhältnis nach Formel (a) im Bereich von 0,1 bis 1 vorzugsweise 0,3 bis 1 besonders bevorzugt 0,5 bis 0,94, weiter bevorzugt 0,7 bis 0,94 und insbesondere bevorzugt im Bereich von 0,8 bis 0,9, liegt.

6. Additiv nach einer der vorhergehenden Ausführungsformen, wobei das Anion ausgewählt ist unter Carbonat, Oxalat, Silikat, Phosphat, Polyphosphat, Phosphit, Borat, Aluminat und Sulfat.

7. Additiv nach Ausführungsform 6, wobei das Anion ausgewählt ist unter Carbonat, Silikat, Phosphat, Aluminat und Gemischen davon.

8. Additiv nach Ausführungsform 7, wobei das Anion Phosphat ist.

9. Additiv nach einer der vorhergehenden Ausführungsformen, wobei der Feststoffanteil 1 bis 45 Gew.-%, bevorzugt 5 bis 40 Gew.-%, besonders bevorzugt 15 bis 35 Gew.-% beträgt.

10. Additiv nach einer der vorhergehenden Ausführungsformen, wobei das mehrwertige Metallkation und das Anion in Mengen vorliegen, die nach folgender Formel berechnet werden:

$$0{,}25 < \frac{\left(\sum_i z_{K,i} \times n_{K,i}\right)^2}{\left(\sum_l z_{A,l} \times n_{A,l}\right)\left(\sum_j z_{S,j} \times n_{S,j}\right)} < 25 \qquad \text{(c)}$$

wobei das Verhältnis nach Formel (c) bevorzugt im Bereich von 0,4 bis 20 liegt und besonders bevorzugt im Bereich von 1 bis 10 liegt.

11. Additiv nach einer der vorhergehenden Ausführungsformen, das bei Normaldruck eine hohe Lagerstabilität aufweist, wobei die Lagerstabilität bei 0 bis 40 °C, bevorzugt bei 5 bis 35 °C gemessen wird.

12. Additiv nach einer der vorhergehenden Ausführungsformen, wobei das Additiv im wesentlichen keine Zubereitung eines $Al^{3+}$, $Ca^{2+}$, oder $Mg^{2+}$ Salzes und eines Silikats umfasst.

13. Additiv nach Ausführungsform 12, wobei die Summe im Zähler der Formel (a) mindestens 200 mal größer ist als der auf die Zubereitungen der $Al^{3+}$, $Ca^{2+}$, oder $Mg^{2+}$ Salze und des Silikats entfallende Teil der Summe im Zähler der Formel (a).

14. Additiv nach Ausführungsform 13, wobei die Summe im Zähler der Formel (a) mindestens 1000 mal größer ist als der auf die Zubereitungen der $Al^{3+}$, $Ca^{2+}$, oder $Mg^{2+}$ Salze und des Silikats entfallende Teil der Summe im Zähler der Formel (a).

15. Additiv nach einer der vorhergehenden Ausführungsformen, zusätzlich umfassend wenigstens ein Neutralisierungsmittel.

16. Additiv nach Ausführungsform 15, wobei das Neutralisierungsmittel ein Alkalimetallhydroxid, ein organisches Monoamin, ein organisches Diamin, ein organisches Polyamin oder Ammoniak ist.

17. Additiv nach Ausführungsform 16, wobei das Neutralisierungsmittel ausgewählt ist unter Natriumhydroxid, Kaliumhydroxid, Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetra-hydroxy-$C_1$-$C_4$-alkyl)-$C_1$-$C_4$-alkylendiaminen, Polyethylenaminen, Polypropylenaminen und Gemischen davon.

18. Additiv nach Ausführungsform 17, wobei das Neutralisierungsmittel ausgewählt ist unter Natriumhydroxid, Kaliumhydroxid, Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alkylendiaminen, Polyethylenaminen und Gemischen davon.

19. Additiv nach Ausführungsform 18, wobei das Neutralisierungsmittel ausgewählt ist unter Natriumhydroxid, Kaliumhydroxid, Ammoniak, Ethylendiamin, Monoethanolamin, Diethanolamin, Triethanolamin, Polyethylenaminen und Gemischen davon.

20. Additiv nach Ausführungsform 19, wobei das Neutralisierungsmittel ausgewählt ist unter Natriumhydroxid und Kaliumhydroxid und Gemischen davon.

21. Additiv nach Ausführungsform 20, wobei das Neutralisierungsmittel Natriumhydroxid ist.

22. Additiv nach einer der vorhergehenden Ausführungsformen, das einen pH-Wert von 2 bis 11,5, vorzugsweise 3 bis 10 und insbesondere 3 bis 9 aufweist.

23. Additiv nach einer der vorhergehenden Ausführungsformen, wobei das polymere Dispergiermittel als anionische

oder anionogene Gruppe zumindest eine Struktureinheit der allgemeinen Formeln (Ia), (Ib), (Ic) und/oder (Id) aufweist:

(Ia)

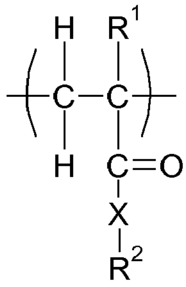

worin
$R^1$ für H oder eine unverzweigte oder verzweigte $C_1$-$C_4$-Alkylgruppe, $CH_2COOH$ oder $CH_2CO$-X-$R^2$ steht;
X für $NR^7$-($C_nH_{2n}$) oder O-($C_nH_{2n}$) mit n = 1, 2, 3 oder 4 steht, wobei das Stickstoffatom bzw. das Sauerstoffatom an die CO-Gruppe gebunden ist;
$R^2$ für $PO_3M_2$, O-$PO_3M_2$, ($C_6H_4$)-$PO_3M_2$ oder ($C_6H_4$)-$OPO_3M_2$ steht;
oder X für eine chemische Bindung und $R^2$ für OM stehen;
wobei $R^2$ vorzugsweise für OM (mit X = chemische Bindung), $PO_3M_2$ oder O-$PO_3M_2$ steht; und
$R^7$ für H, $C_1$-$C_6$-Alkyl, ($C_nH_{2n}$)-OH, ($C_nH_{2n}$)-$PO_3M_2$, ($C_nH_{2n}$)-$OPO_3M_2$, ($C_6H_4$)-$PO_3M_2$, ($C_6H_4$)-$OPO_3M_2$ oder ($C_nH_{2n}$)-O-$(AO)_\alpha$-$R^9$, vorzugsweise für H, steht;
$\alpha$ für eine ganze Zahl von 1 bis 350 steht;
$R^9$ für H oder eine unverzweigte oder verzweigte $C_1$-$C_4$-Alkylgruppe steht;

(Ib)

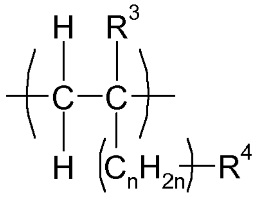

worin

$R^3$ für H oder eine unverzweigte oder verzweigte $C_1$-$C_4$-Alkylgruppe steht; n für 0, 1, 2, 3 oder 4 steht;
$R^4$ für $PO_3M_2$, oder O-$PO_3M_2$ steht;

(Ic)

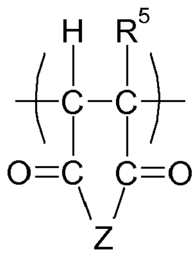

worin
$R^5$ für H oder eine unverzweigte oder verzweigte $C_1$-$C_4$-Alkylgruppe steht;
Z für O oder $NR^7$ steht; und
$R^7$ für H, ($C_nH_{2n}$)-OH, ($C_nH_{2n}$)-$PO_3M_2$, ($C_nH_{2n}$)-$OPO_3M_2$, ($C_6H_4$)-$PO_3M_2$, oder ($C_6H_4$)-$OPO_3M_2$ steht,
n für 1, 2, 3 oder 4 steht;

(Id)

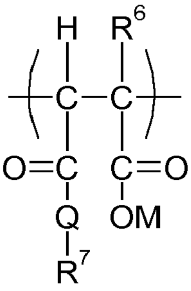

worin
$R^6$ für H oder eine unverzweigte oder verzweigte $C_1$-$C_4$-Alkylgruppe steht;
Q für $NR^7$ oder O steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\alpha$-$R^9$ steht,
A für $C_xH_{2x}$ mit x = 2, 3, 4 oder 5 oder $CH_2CH(C_6H_5)$ steht;
$\alpha$ für eine ganze Zahl von 1 bis 350 steht;
$R^9$ für H oder eine unverzweigte oder verzweigte $C_1$-$C_4$-Alkylgruppe steht;
n für 1, 2, 3 oder 4 steht; und
wobei jedes M unabhängig voneinander für H oder ein Kationäquivalent steht.

24. Additiv nach Ausführungsform 23, wobei das polymere Dispergiermittel als anionische oder anionogene Gruppe mindestens eine Struktureinheit der Formel (Ia) aufweist, worin $R^1$ für H oder $CH_3$ steht; und/oder mindestens eine Struktureinheit der Formel (Ib), worin $R^3$ für H oder $CH_3$ steht; und/oder mindestens eine Struktureinheit der Formel (Ic), worin $R^5$ für H oder $CH_3$ steht und Z für O steht; und/oder mindestens eine Struktureinheit der Formel (Id), worin $R^6$ für H steht und Q für O steht.

25. Additiv nach Ausführungsform 23, wobei das polymere Dispergiermittel als anionische oder anionogene Gruppe mindestens eine Struktureinheit der Formel (Ia) aufweist, worin $R^1$ für H oder $CH_3$ steht und $XR^2$ für OM oder X für $O(C_nH_{2n})$ mit n = 1, 2, 3 oder 4, insbesondere 2, steht und $R^2$ für O-$PO_3M_2$ steht.

26. Additiv für hydraulisch abbindende Massen nach einer der vorhergehenden Ausführungsformen, wobei das polymere Dispergiermittel als Polyetherseitenkette zumindest eine Struktureinheit der allgemeinen Formeln (IIa), (IIb), (IIc) und/oder (IId) aufweist:

(IIa)

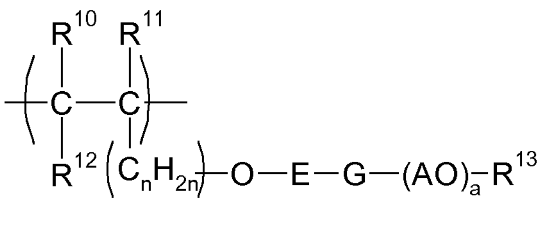

worin
$R^{10}$, $R^{11}$ und $R^{12}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht;
G für O, NH oder CO-NH steht; oder
E und G gemeinsam für eine chemische Bindung stehen;
A für $C_xH_{2x}$ mit x = 2, 3, 4 oder 5 oder $CH_2CH(C_6H_5)$ steht;
n für 0, 1, 2, 3, 4 und/oder 5 steht;
a für eine ganze Zahl von 2 bis 350 steht;
$R^{13}$ für H, eine unverzweigte oder verzweigte $C_1$-$C_4$-Alkylgruppe, CO-$NH_2$ und/oder $COCH_3$ steht;

(IIb)

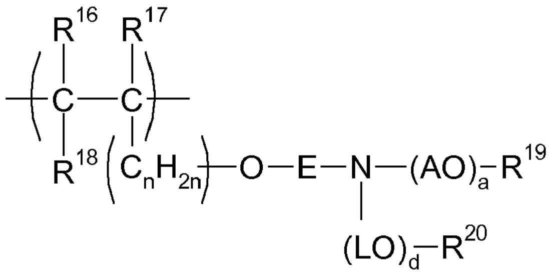

worin

$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;
A für $C_xH_{2x}$ mit x = 2, 3, 4 oder 5 oder $CH_2CH(C_6H_5)$ steht;
L für $C_xH_{2x}$ mit x = 2, 3, 4 oder 5 oder $CH_2$-$CH(C_6H_5)$ steht;
a für eine ganze Zahl von 2 bis 350 steht;
d für eine ganze Zahl von 1 bis 350 steht;
$R^{19}$ für H oder eine unverzweigte oder verzweigte $C_1$-$C_4$-Alkylgruppe steht;
$R^{20}$ für H oder eine unverzweigte oder verzweigte $C_1$-$C_4$-Alkylgruppe steht; und
n für 0, 1, 2, 3, 4 oder 5 steht;

(IIc)

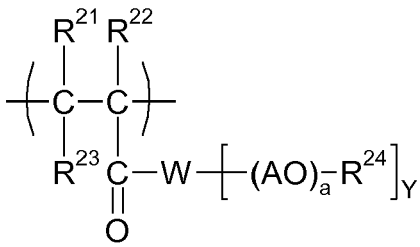

worin

$R^{21}$ , $R^{22}$ und $R^{23}$ unabhängig voneinander für H oder eine unverzweigte oder verzweigte $C_1$-$C_4$-Alkylgruppe stehen;
W für O, $NR^{25}$, N steht
Y für 1 steht, wenn W = O oder $NR^{25}$, und für 2 steht, wenn W = N;
A für $C_xH_{2x}$ mit x = 2, 3, 4 oder 5 oder $CH_2CH(C_6H_5)$ steht;
a für eine ganze Zahl von 2 bis 350 steht;
$R^{24}$ für H oder eine unverzweigte oder verzweigte $C_1$-$C_4$-Alkylgruppe steht;
$R^{25}$ für H oder eine unverzweigte oder verzweigte $C_1$-$C_4$-Alkylgruppe steht;

(IId)

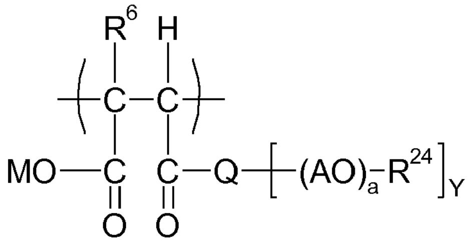

worin

$R^6$ für H oder eine unverzweigte oder verzweigte $C_1$-$C_4$-Alkylgruppe steht;
Q für $NR^{10}$, N oder O steht;

Y für 1 steht, wenn Q = O oder $NR^{10}$ und für 2 steht, wenn Q = N;
$R^{10}$ für H oder eine unverzweigte oder verzweigte $C_1$-$C_4$-Alkylgruppe steht;
$R^{24}$ für H oder eine unverzweigte oder verzweigte $C_1$-$C_4$-Alkylgruppe steht;
A für $C_xH_{2x}$ mit x = 2, 3, 4 oder 5, oder $CH_2C(C_6H_5)H$ steht; und
a für eine ganze Zahl von 2 bis 350 steht.

27. Additiv nach Ausführungsform 26, wobei das polymere Dispergiermittel als Polyetherseitenkette aufweist:

(a) mindestens eine Struktureinheit der Formel (IIa), worin $R^{10}$ und $R^{12}$ für H stehen, $R^{11}$ für H oder $CH_3$ steht, E und G gemeinsam für eine chemische Bindung stehen, A für $C_xH_{2x}$ mit x = 2 und/oder 3, a für 3 bis 150 steht, und $R^{13}$ für H oder eine unverzweigte oder verzweigte $C_1$-$C_4$-Alkylgruppe steht; und/oder
(b) mindestens eine Struktureinheit der Formel (IIb), worin $R^{16}$ und $R^{18}$ für H stehen, $R^{17}$ für H oder $CH_3$ steht, E für eine unverzweigte oder verzweigte $C_1$-$C_6$-Alkylengruppe steht, A für $C_xH_{2x}$ mit x = 2 und/oder 3 steht, L für $C_xH_{2x}$ mit x = 2 und/oder 3 steht, a für eine ganze Zahl von 2 bis 150 steht, d für eine ganze Zahl von 1 bis 150 steht, $R^{19}$ für H oder eine unverzweigte oder verzweigte $C_1$-$C_4$-Alkylgruppe steht, und $R^{20}$ für H oder eine unverzweigte oder verzweigte $C_1$-$C_4$-Alkylgruppe steht;und/oder
(c) mindestens eine Struktureinheit der Formel (IIc), worin $R^{21}$ und $R^{23}$ für H stehen, $R^{22}$ für H oder $CH_3$ steht, A für $C_xH_{2x}$ mit x = 2 und/oder 3 steht, a für eine ganze Zahl von 2 bis 150 steht, und $R^{24}$ für H oder eine unverzweigte oder verzweigte $C_1$-$C_4$-Alkylgruppe steht;und/oder
(d) mindestens eine Struktureinheit der Formel (IId), worin $R^6$ für H steht, Q für O steht, $R^7$ für $(C_nH_{2n})$-O-$(AO)_\alpha$-$R^9$ steht, n für 2 und/oder 3 steht, A für $C_xH_{2x}$ mit x = 2 und/oder 3, $\alpha$ für eine ganze Zahl von 1 bis 150 steht und $R^9$ für H oder eine unverzweigte oder verzweigte $C_1$-$C_4$-Alkylgruppe steht.

28. Additiv nach einer der Ausführungsformen 26 oder 27, wobei das polymere Dispergiermittel mindestens eine Struktureinheit der Formel (IIa) und/oder (IIc) umfasst.

29. Additiv nach einer der Ausführungsformen 1 bis 22, wobei das polymere Dispergiermittel ein Polykondensationsprodukt umfassend Struktureinheiten (III) und (IV) ist:

(III)

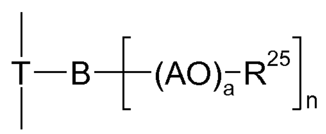

worin
T für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht; ausgewählt
A für $C_xH_{2x}$ mit x = 2, 3, 4 oder 5 oder $CH_2CH(C_6H_5)$ steht;
a für eine ganze Zahl von 1 bis 300 steht;
$R^{25}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;
wobei die Struktureinheit (IV) ausgewählt ist unter den Struktureinheiten (IVa) und (IVb):

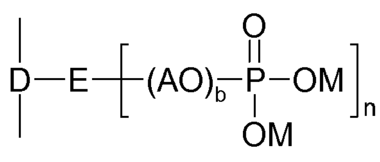

(IVa)

worin

D für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass n für 2 steht, wenn E für N steht und der Maßgabe, dass n für 1 steht, wenn E für NH oder O steht;
A für $C_xH_{2x}$ mit x = 2, 3, 4 oder 5 oder $CH_2CH(C_6H_5)$ steht;
b für eine ganze Zahl von 1 bis 300 steht;
M unabhängig voneinander für H oder ein Kationäquivalent stehen;

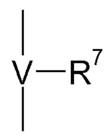

(IVb)

worin
V für einen substituierten oder unsubstituierten Phenyl- oder Naphthylrest steht und gegebenenfalls durch 1 oder zwei Reste substituiert ist, die ausgewählt sind unter $R^8$, OH, $OR^8$, $(CO)R^8$, COOM, $COOR^8$, $SO_3R^8$ und $NO_2$;
$R^7$ für COOM, $OCH_2COOM$, $SO_3M$ oder $OPO_3M_2$ steht;
M für H oder ein Kationäquivalent steht; und
$R^8$ für $C_1$-$C_4$-Alkyl, Phenyl, Naphthyl, Phenyl-$C_1$-$C_4$-alkyl oder $C_1$-$C_4$-Alkylphenyl steht.

30. Additiv nach Ausführungsform 29, wobei T für einen substituierten oder unsubstituierten Phenylrest oder Naphthylrest steht, E für NH oder O steht, A für $C_xH_{2x}$ mit x = 2 und/oder 3 steht, a für eine ganze Zahl von 1 bis 150 steht, und $R^{25}$ für H, oder einen verzweigten oder unverzweigten $C_1$- bis $C_{10}$-Alkylrest steht.

31. Additiv nach Ausführungsform 29, wobei D für einen substituierten oder unsubstituierten Phenylrest oder Naphthylrest steht, E für NH oder O steht, A für $C_xH_{2x}$ mit x = 2 und/oder 3 steht, und b für eine ganze Zahl von 1 bis 150 steht.

32. Additiv nach einer der Ausführungsformen 29 bis 31, wobei T und/oder D für Phenyl oder Naphthyl, das durch 1 oder 2 $C_1$-$C_4$-Alkyl-, Hydroxy- oder 2 $C_1$-$C_4$-Alkoxygruppen substituiert ist, stehen.

33. Additiv nach Ausführungsform 29, wobei V für Phenyl oder Naphthyl, das durch 1 oder 2 $C_1$-$C_4$-Alkyl, OH, $OCH_3$ oder COOM substituiert ist, und $R^7$ für COOM oder $OCH_2COOM$ steht.

34. Additiv nach einer der Ausführungsformen 29 bis 32, wobei das Polykondensationsprodukt eine weitere Struktureinheit (V) der Formel

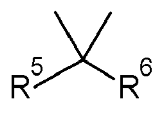

(V)

umfasst, worin
$R^5$ und $R^6$ gleich oder verschieden sein können und für H, $CH_3$, COOH oder für eine substituierte oder unsubstituierte Phenyl- oder Naphthylgruppe stehen.

35. Additiv nach Ausführungsform 34, worin $R^5$ und $R^6$ gleich oder verschieden sein können und für H, $CH_3$, oder COOH, insbesondere für H oder einer der Reste $R^5$ und $R^6$ für H und der andere für $CH_3$, stehen.

36. Additiv nach einer der Ausführungsformen 1 bis 28, wobei das polymere Dispergiermittel Einheiten der Formeln (I) und (II), insbesondere der Formeln (Ia) und (IIa) aufweist.

37. Additiv nach einer der Ausführungsformen 1 bis 28, wobei das polymere Dispergiermittel Struktureinheiten der Formeln (Ia) und (IIc) aufweist.

38. Additiv nach einer der Ausführungsformen 1 bis 28, wobei das polymere Dispergiermittel Struktureinheiten der Formeln (Ic) und (IIa) aufweist.

39. Additiv nach einer der Ausführungsformen 1 bis 28, wobei das polymere Dispergiermittel Struktureinheiten der Formeln (Ia), (Ic) und (IIa) aufweist.

40. Additiv nach einer der Ausführungsformen 1 bis 28, wobei das polymere Dispergiermittel aufgebaut ist aus (i) anionischen oder anionogenen Struktureinheiten, die abgeleitet sind von Acrylsäure, Methacrylsäure, Maleinsäure, Hydroxyethylacrylatphosphorsäureester, und/oder Hydroxyethylmethacrylatphosphorsäureester, Hydroxyethylacrylat-Phosphorsäurediester, und/oder Hydroxyethylmethacrylat-Phosphorsäurediester und (ii) Polyetherseitenkettenstruktureinheiten, die abgeleitet sind von $C_1$-$C_4$-Alkyl-polyethylenglykolacrylsäureester, Polyethylenglykolacrylsäureester,$C_1$-$C_4$-Alkyl-polyethylenglykolmethacrylsäureester, Polyethylenglykolmethacrylsäureester, $C_1$-$C_4$-Alkyl-polyethylenglykolacrylsäureester, Polyethylenglykolacrylsäureester, Vinyloxy-$C_2$-$C_4$-alkylen-polyethylenglykol, Vinyloxy-$C_2$-$C_4$-alkylen-polyethylenglykol-$C_1$-$C_4$-alkylether, Allyloxy-polyethylenglykol, Allyloxy-polyethylenglykol-$C_1$-$C_4$-alkylether, Methallyloxy-polyethylen-glykol, Methallyloxy-polyethylenglykol-$C_1$-$C_4$-alkylether, Isoprenyloxy-polyethylenglykol und/oder Isoprenyloxy-polyethylenglykol-$C_1$-$C_4$-alkylether.

41. Additiv nach Ausführungsform 40, wobei das polymere Dispergiermittel aufgebaut ist aus Struktureinheiten (i) und (ii), die abgeleitet sind von

(i) Hydroxyethylacrylatphosphorsäureester und/oder Hydroxyethylmethacrylatphosphorsäureester und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure und/oder Methacrylsäure und (ii) $C_1$-$C_4$-Alkyl-polyethylenglykolacryl-säureester und/oder $C_1$-$C_4$-Alkyl-polyethylenglykolmethacrylsäureester; oder

(i) Acrylsäure Methacrylsäure und/oder Maleinsäure und (ii) Vinyloxy-$C_2$-$C_4$-alkylen-polyethylenglykol, Allyloxy-polyethylenglykol, Methallyloxy-polyethylen-glykol und/oder Isoprenyloxy-polyethylenglykol.

42. Additiv nach Ausführungsform 40, wobei das polymere Dispergiermittel aufgebaut ist aus Struktureinheiten (i) und (ii), die abgeleitet sind von

(i) Hydroxyethylmethacrylatphosphorsäureester und (ii) $C_1$-$C_4$-Alkyl-polyethylenglykolmethacrylsäureester oder Polyethylenglykolmethacrylsäureester; oder

(i) Methacrylsäure und (ii) $C_1$-$C_4$-Alkyl-polyethylenglykolmethacrylsäureester oder Polyethylenglykolmethacrylsäureester ; oder

(i) Acrylsäure und Maleinsäure und (ii) Vinyloxy-$C_2$-$C_4$-alkylen-polyethylenglykol oder

(i) Acrylsäure und Maleinsäure und (ii) Isoprenyloxy-polyethylenglykol oder

(i) Acrylsäure und (ii) Vinyloxy-$C_2$-$C_4$-alkylen-polyethylenglykol oder

(i) Acrylsäure und (ii) Isoprenyloxy-polyethylenglykol oder

(i) Acrylsäure und (ii) Methallyloxy-polyethylenglykol oder

(i) Maleinsäure und (ii) Isoprenyloxy-polyethylenglykol oder

(i) Maleinsäure und (ii) Allyloxy-polyethylenglykol oder

(i) Maleinsäure und (ii) Methallyloxy-polyethylenglykol.

43. Additiv nach einer der Ausführungsformen 23 bis 28, wobei das Molverhältnis der Struktureinheiten (I) : (II) 1:4 bis 15:1, insbesondere 1:1 bis 10:1, beträgt.

44. Additiv nach einer der Ausführungsformen 29 bis 35, wobei das Molverhältnis der Struktureinheiten (III) : (IV) 4:1 bis 1:15, insbesondere 2:1 bis 1:10, beträgt.

45. Additiv nach einer der Ausführungsformen 29 bis 35, wobei das Molverhältnis der Struktureinheiten (III + IV) : (V) 2:1 bis 1:3, insbesondere 1:0,8 bis 1:2, beträgt.

46. Additiv nach einer der Ausführungsformen 29 bis 35 oder 45, wobei das polymere Dispergiermittel aufgebaut ist aus Struktureinheiten der Formeln (III) und (IV), worin T und D für Phenyl oder Naphthyl steht, wobei das Phenyl oder Naphthyl die gegebenenfalls durch 1 oder 2 $C_1$-$C_4$-Alkyl-, Hydroxy- oder 2 $C_1$-$C_4$-Alkoxygruppen substituiert ist, B und E für O stehen, A für $C_xH_{2x}$ mit x = 2 steht, a für 3 bis 150, insbesondere 10 bis 150, steht, und b für 1, 2 oder 3 steht.

47. Additiv nach einer der vorhergehenden Ausführungsformen, dadurch erhältlich, dass man das Salz des mehrwertigen Metallkations in Gegenwart des polymeren Dispergiermittels fällt, um eine kolloid-disperse Zubereitung des Salzes zu erhalten.

48. Additiv nach einer der vorhergehenden Ausführungsformen, dadurch erhältlich, dass man ein frisch gefälltes Salz des mehrwertigen Metallkations in Gegenwart des polymeren Dispergiermittels dispergiert, um eine kolloid-disperse Zubereitung des Salzes zu erhalten.

49. Additiv nach einer der Ausführungsformen 46 oder 47, wobei man die kolloid-disperse Zubereitung mit einem Neutralisierungsmittel versetzt.

50. Additiv nach einer der Ausführungsformen 1 bis 48, dadurch erhältlich, dass man ein Hydroxid und/oder Oxid des mehrwertigen Metallkations mit einer Säure peptisiert, um eine kolloid-disperse Zubereitung des Salzes des mehrwertigen Metallkations zu erhalten.

51. Additiv nach Ausführungsform 50, wobei die Säure ausgewählt ist unter Borsäure, Kohlensäure, Oxalsäure, Kieselsäure, Schwefelsäure, Polyphosphorsäure, Phosphorsäure und/oder Phosphoriger Säure.

52. Additiv nach Ausführungsform 50, wobei die saure Form des polymeren Dispergiermittels zur Peptisierung des Hydroxids und/oder Oxids des mehrwertigen Metallkations eingesetzt wird.

53. Additiv nach einer der vorhergehenden Ausführungsformen, umfassend eine Zubereitung eines $Al^{3+}$-Salzes.

54. Additiv nach einer der Ausführungsformen 1 bis 52, umfassend eine Zubereitung eines $Fe^{3+}$-Salzes.

55. Additiv nach einer der Ausführungsformen 1 bis 52, umfassend eine Zubereitung eines $Fe^{2+}$-Salzes.

56. Additiv nach einer der Ausführungsformen 1 bis 52, umfassend eine Zubereitung eines $Ca^{2+}$-Salzes.

57. Additiv nach einer der vorhergehenden Ausführungsformen, wobei das Anion ausgewählt ist unter Carbonat, Silikat, Phosphat und Aluminat, insbesondere Phosphat.

58. Additiv nach Ausführungsform 57, wobei das Anion Phosphat ist und das Verhältnis nach Formel (b) im Bereich von 0,01 bis 2 liegt.

59. Additiv nach Ausführungsform 57, wobei das Anion Phosphat ist und das Verhältnis nach Formel (b) im Bereich von 0,1 und 1,0 liegt.

60. Additiv nach Ausführungsform 57, wobei das Anion Phosphat ist und das Verhältnis nach Formel (b) im Bereich von 0,2 bis 0,75 liegt.

61. Verfahren zur Herstellung des Additivs für hydraulisch abbindende Massen nach einer der Ausführungsformen 1 bis 60, wobei man das Salz des mehrwertigen Metallkations in Gegenwart des polymeren Dispergiermittels fällt, um eine kolloid-disperse Zubereitung des Salzes zu erhalten.

62. Verfahren zur Herstellung des Additivs für hydraulisch abbindende Massen nach einer der Ausführungsformen 1 bis 60, wobei man ein frisch gefälltes Salz des mehrwertigen Metallkations in Gegenwart des polymeren Dispergiermittels dispergiert, um eine kolloid-disperse Zubereitung des Salzes zu erhalten.

63. Verwendung des Additivs nach einer der Ausführungsformen 1 bis 60 als Slump-retainer in wasserhaltigen Baustoffmischungen, die ein hydraulisches Bindemittel enthalten.

64. Verwendung nach Ausführungsform 63, wobei das hydraulische Bindemittel ausgewählt ist unter (Portland)zement, Hüttensand, Flugasche, Silikastaub, Metakaolin, natürlichen Puzzolanen, gebranntem Ölschiefer, Calcium-Aluminat-Zement und Mischungen zweier oder mehrerer dieser Komponenten.

65. Baustoffmischung, umfassend ein Additiv nach einer der Ausführungsformen 1 bis 60 und ein Bindemittel, ausgewählt unter (Portland)zement, Hüttensand, Flugasche, Silikastaub, Metakaolin, natürlichen Puzzolanen, gebranntem Ölschiefer, Calcium-Aluminat-Zement und Gemischen davon.

66. Baustoffmischung nach Ausführungsform 65, welche als hydraulisches Bindemittel (Portland)zement umfasst.

67. Baustoffmischung nach Ausführungsform 65, welche im wesentlichen keinen (0 bis 5 Gew.-%) Portlandzement umfasst.

In allen erfindungsgemäßen Ausführungsformen liegt das mehrwertige Metallkation in unterstöchiometrischer oder stöchiometrischer Menge vor, gerechnet als Kationenäquivalente, bezogen auf die Summe der anionischen und anionogenen Gruppen des polymeren Dispergiermittels.

Die Summe über das Produkt aus Ladungszahl $z_{S,j}$ und Molzahl $n_{S,j}$ in mmol/g des polymeren Dispergiermittels kann nach verschiedenen bekannten Verfahren bestimmt werden, beispielsweise durch die Bestimmung durch Ladungsdichtetitration mit einem Polykation wie z.B. beschrieben in J. Plank et al., Cem. Conr. Res. 2009, 39, 1-5. Weiterhin ist der mit dem Stand der Technik vertraute Fachmann in der Lage, diesen Wert aus den Monomereinwaagen für die Synthese des polymeren Dispergiermittels in einfacher Rechnung zu bestimmen (siehe Rechnung für Beispiel 478). Schließlich ist es möglich den Zahlenwert der Summe über das Produkt aus $z_S$ und $n_S$ experimentell zu erhalten, indem durch Kernresonanzspektroskopie (NMR) die Verhältnisse der Polymerbausteine bestimmt werden. Dafür nutzt man insbesondere die Integration der Signale im $^1$H-NMR Spektrum eines gelösten polymeren Dispergiermittels.

Das mehrwertige Metallkation ist vorzugsweise ausgewählt unter $Al^{3+}$, $Fe^{3+}$, $Fe^{2+}$, $Zn^{2+}$, $Mn^{2+}$, $Cu^{2+}$, $Ca^{2+}$, $Mg^{2+}$, $Sr^{2+}$, $Ba^{2+}$ und Gemischen davon, bevorzugt ausgewählt unter $Al^{3+}$, $Fe^{3+}$, $Fe^{2+}$, $Mn^{2+}$, $Zn^{2+}$, $Ca^{2+}$ und Gemischen davon, besonders bevorzugt ausgewählt unter $Al^{3+}$, $Fe^{3+}$, $Fe^{2+}$, $Ca^{2+}$ und Gemischen davon.

Bevorzugt ist das Gegenanion des wasserlöslichen Salzes des mehrwertigen Metallkations so gewählt, dass die Salze gut wasserlöslich sind, bevorzugt ist die Löslichkeit bei Standardbedingungen von 20 °C und Normaldruck größer als 10 g/l, besonders bevorzugt größer als 100 g/l und insbesondere bevorzugt größer als 200 g/l. Der Zahlenwert der Löslichkeit bezieht sich dabei auf die Gesamtmasse gelöster Metallkationen und Gegenanionen, die sich im Gleichgewichtszustand beim Lösen des wasserlöslichen Salzes in deionisiertem Wasser bei 20°C und Normaldruck einstellt. Die Löslichkeit berücksichtigt nicht die Effekte durch Protonierungsgleichgewichte (pH-Wert) und Komplexierungsgleichgewichte.

Bevorzugt ist das Gegenanion einfach geladen und ausgewählt unter Nitrat, Acetat, Formiat, Hydrogensulfat, Halogenid, Halogenat, Cyanid, Azid, Cyanat, Thiocyanat, Fulminat, Methansulfonat und/oder Amidosulfonat. Besonders bevorzugt ist das Gegenanion ausgewählt unter Chlorid und Nitrat. Ganz besonders bevorzugt ist das Gegenanion Nitrat. Auch Doppelsalze können als Salze mehrwertiger Metallkationen eingesetzt werden. Doppelsalze sind Salze, welche mehrere verschiedene Kationen aufweisen. Beispielhaft genannt sei der Alaun ($KAl(SO_4)_2 \cdot 12H_2O$), welcher als Aluminiumsalz geeignet ist. Die Salze mehrwertiger Metallkationen mit den vorstehend genannten Gegenanionen sind gut wasserlöslich und damit besonders gut geeignet, da höhere Konzentrationen der wässrigen Metallsalzlösungen (als Edukt) eingestellt werden können.

Anionische Gruppen sind die im polymeren Dispergiermittel enthaltenen deprotonierten Säuregruppen. Anionogene Gruppen sind die im polymeren Dispergiermittel enthaltenen Säuregruppen. Gruppen, die zugleich anionisch und anionogen sind, wie teilweise deprotonierte mehrbasige Säurereste, werden bei der Bildung der Summe der Molzahlen der im polymeren Dispergiermittel enthaltenen anionischen und anionogenen Gruppen ausschließlich den anionischen Gruppen zugerechnet.

Als verschiedenartige mehrwertige Metallkationen werden mehrwertige Metallkationen unterschiedlicher Elemente bezeichnet. Darüber hinaus werden als verschiedenartige mehrwertige Metallkationen auch Metallkationen desselben Elements mit unterschiedlicher Ladungszahl bezeichnet.

Als verschiedenartig werden anionische und anionogene Gruppen des polymeren Dispergiermittels bezeichnet, die sich durch Protonierung nicht ineinander überführen lassen.

Das Verhältnis nach Formel (a)

$$0 < \frac{\sum_i z_{K,i} \times n_{K,i}}{\sum_j z_{S,j} \times n_{S,j}} \leq 1 \quad \text{(a)}$$

liegt bevorzugt im Bereich von 0,1 bis 1 vorzugsweise 0,3 bis 1, besonders bevorzugt 0,5 bis 0,94, weiter bevorzugt 0,7 bis 0,94 und insbesondere bevorzugt im Bereich von 0,8 bis 0,9.

Das Verhältnis nach Formel (b)

$$0 < \frac{\sum_l z_{A,l} \times n_{A,l}}{\sum_j z_{K,i} \times n_{K,i}} \leq 3 \quad \text{(b)}$$

liegt bevorzugt im Bereich von 0,01 und 2, vorzugsweise 0,05 bis 1,5, besonders bevorzugt 0,1 bis 1,0, weiterhin besonders bevorzugt 0,15 bis 0,8 und ganz besonders bevorzugt im Bereich von 0,2 bis 0,75.

Dabei kann jeder Bereich für Formel (a) mit jedem Bereich für Formel (b) kombiniert werden.

Als schwerlösliches Salz ist ein Salz bezeichnet, dessen Löslichkeit in Wasser bei Standardbedingungen von 20 °C und Normaldruck kleiner als 5 g/l ist, bevorzugt kleiner als 1 g/l ist.

Als wasserlösliches Salz ist ein Salz bezeichnet, dessen Löslichkeit in Wasser bei Standardbedingungen von 20 °C und Normaldruck größer als 5 g/l ist.

Das Anion ist ausgewählt unter Carbonat, Oxalat, Silikat, Phosphat, Polyphosphat, Phosphit, Borat, Aluminat und Sulfat. Bevorzugt ist das Anion ausgewählt unter Carbonat, Silikat, Phosphat und Aluminat, besonders bevorzugt ist das Anion Phosphat.

Zu den genannten Anionen zählen auch die polymeren Bor-, Silikat-, und Oxalatanionen sowie die Polyphosphate. Unter dem Begriff "polymere Anionen" sind Anionen zu verstehen, welche neben Sauerstoffatomen mindestens zwei Atome aus der Reihe Bor, Kohlenstoff, Silicium und Phosphor umfassen. Besonders bevorzugt handelt es sich um Oligomere mit einer Anzahl von Atomen zwischen 2 und 20, insbesondere bevorzugt 2 bis 14 Atomen, am meisten bevorzugt 2 bis 5 Atomen. Die Anzahl der Atome liegt bei den Silikaten besonders bevorzugt im Bereich von 2 bis 14 Siliciumatomen und bei den Polyphosphaten besonders bevorzugt im Bereich von 2 bis 5 Phosphoratomen.

Als Verbindung, die ein Silikat freizusetzen vermag ist $Na_2SiO_3$ und Wasserglas mit einem Modul, definiert als das Verhältnis von $SiO_2$ zu Alkalioxid, im Bereich von 1 / 1 zu 4 / 1, besonders bevorzugt 1 / 1 zu 3/1.

Bei den Silikaten ist es möglich, dass ein Teil der Siliciumatome der Silikate durch Aluminium ersetzt wird. Aus der Klasse der Aluminosilicate sind entsprechende Verbindungen bekannt. Bevorzugt ist der Anteil von Aluminium kleiner als 10 mol % bezogen auf die Summe von Silicium und Aluminium, besonders bevorzugt ist der Aluminiumanteil gleich null.

Es hat sich als vorteilhaft erwiesen, wenn das Anion Phosphat ist und das Verhältnis nach Formel (b) im Bereich von 0,01 bis 2 liegt.

Es hat sich weiter als vorteilhaft erwiesen, wenn das Anion Phosphat ist und das Verhältnis nach Formel (b) im Bereich von 0,1 bis 1,0 liegt.

Es hat sich als besonders vorteilhaft erwiesen, wenn das Anion Phosphat ist und das Verhältnis nach Formel (b) im Bereich von 0,2 bis 0,75 liegt.

Bevorzugt ist das Gegenkation der Verbindung, die das Anion freizusetzen vermag, ein einfach geladenes Kation bzw. ein Proton, bevorzugt ein Alkalimetallkation und/oder Ammoniumion und/oder ein Proton, besonders bevorzugt ein Proton. Das Ammoniumion kann auch ein organisches Ammoniumion umfassen, beispielsweise Alkylammoniumionen mit ein bis vier Alkylresten. Der organische Rest kann auch aromatischer Natur sein oder aromatische Reste umfassen. Das Ammoniumion kann auch ein Alkanolammoniumion sein.

Das Additiv für hydraulisch abbindende Massen kann zusätzlich wenigstens ein Neutralisierungsmittel umfassen.

Bevorzugt ist das Neutralisierungsmittel ein Alkalimetallhydroxid, ein organisches Monoamin, ein organisches Diamin, ein organisches Polyamin oder Ammoniak. Geeignete organische Amine sind insbesondere ein aliphatisches Monoamin, aliphatisches Diamin oder ein aliphatisches Polyamin. Polyamine sind auch Triamine.

Weiterhin bevorzugt ist das Neutralisierungsmittel ausgewählt unter Natriumhydroxid, Kaliumhydroxid, Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetra-hydroxy-$C_1$-$C_4$-alkyl)-$C_1$-$C_4$-alkylendiaminen, Polyethylenaminen, Polypropylenaminen und Gemischen davon.

Besonders bevorzugt ist das Neutralisierungsmittel ausgewählt unter Natriumhydroxid, Kaliumhydroxid, Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alky-

lendiaminen, Polyethylenaminen und Gemischen davon.

Insbesondere bevorzugt ist das Neutralisierungsmittel ausgewählt unter Natriumhydroxid, Kaliumhydroxid, Ammoniak, Ethylendiamin, Monoethanolamin, Diethanolamin, Triethanolamin, Polyethylenaminen und Gemischen davon.

Ganz besonders bevorzugt ist das Neutralisierungsmittel ausgewählt unter Natriumhydroxid und Kaliumhydroxid und Gemischen davon. Am meisten bevorzugt ist das Neutralisierungsmittel Natriumhydroxid.

Vorzugsweise weist das Additiv für hydraulisch abbindende Massen einen pH-Wert von 2 bis 11,5, vorzugsweise 3 bis 10 und insbesondere 3 bis 9, auf.

In einer Ausführungsform weist das polymere Dispergiermittel zumindest eine Struktureinheit der allgemeinen Formeln (Ia), (Ib), (Ic) und/oder (Id) auf, wobei die Struktureinheiten (Ia), (Ib), (Ic) und (Id) sowohl innerhalb einzelner Polymermoleküle, als auch zwischen verschiedenen Polymermolekülen gleich oder verschieden sein können.

(Ia)

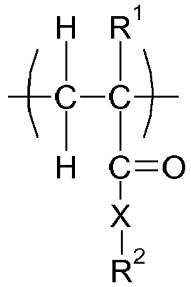

worin

$R^1$ für H oder eine unverzweigte oder verzweigte $C_1$-$C_4$-Alkylgruppe, $CH_2COOH$ oder $CH_2CO$-X-$R^2$, vorzugsweise für H oder $CH_3$, steht;

X für $NR^7$-$(C_nH_{2n})$, $O(C_nH_{2n})$ mit n = 1, 2, 3 oder 4, wobei das Stickstoffatom bzw. das Sauerstoffatom an die CO-Gruppe gebunden ist, vorzugsweise für $O(C_nH_{2n})$, steht;

$R^2$ für $PO_3M_2$, O-$PO_3M_2$, $(C_6H_4)$-$PO_3M_2$ oder $(C_6H_4)$-$OPO_3M_2$ steht;

oder X für eine chemische Bindung und $R^2$ für OM stehen;

wobei $R^2$ vorzugsweise für OM (mit X = chemische Bindung), $PO_3M_2$ oder O-$PO_3M_2$ steht; $R^7$ für H, $C_1$-$C_6$-Alkyl, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\alpha$-$R^9$, vorzugsweise für H, steht;

$\alpha$ für eine ganze Zahl von 1 bis 350 steht; und

$R^9$ für H oder eine unverzweigte oder verzweigte $C_1$-$C_4$-Alkylgruppe steht;

(Ib)

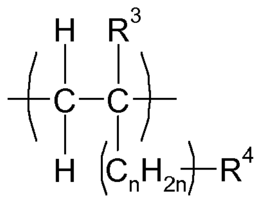

worin

$R^3$ für H oder eine unverzweigte oder verzweigte $C_1$-$C_4$-Alkylgruppe, vorzugsweise für H oder $CH_3$, steht;

n für 0, 1, 2, 3 oder 4, vorzugsweise für 0 oder 1, steht;

$R^4$ für $PO_3M_2$, oder O-$PO_3M_2$ steht;

(Ic)

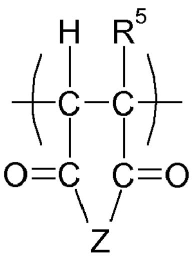

worin
$R^5$ für H oder eine unverzweigte oder verzweigte $C_1$-$C_4$-Alkylgruppe, vorzugsweise für H, steht;
Z für O oder oder $NR^7$, vorzugsweise für O, steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht, und
n für 1, 2, 3 oder 4, vorzugsweise für 1, 2 oder 3, steht;

(Id)

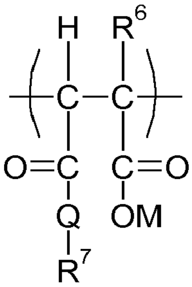

worin
$R^6$ für H oder eine unverzweigte oder verzweigte $C_1$-$C_4$-Alkylgruppe, vorzugsweise für H, steht;
Q für $NR^7$ oder O, vorzugsweise für O, steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$, oder $(C_nH_{2n})$-O-$(AO)_\alpha$-$R^9$ steht;
A für $C_xH_{2x}$ mit x = 2, 3, 4 oder 5 oder $CH_2CH(C_6H_5)$ steht;
$\alpha$ für eine ganze Zahl von 1 bis 350 steht;
$R^9$ für H oder eine unverzweigte oder verzweigte $C_1$-$C_4$-Alkylgruppe steht;
n für 1, 2, 3 oder 4, vorzugsweise für 1, 2 oder 3, steht; und
jedes M unabhängig voneinander für H oder ein Kationäquivalent steht.

Besonders bevorzugt handelt es sich bei der Struktureinheit nach Formel la um eine Methacrylsäure- oder Acrylsäure-Einheit, bei der Struktureinheit nach Formel Ic um eine Maleinsäureanhydrid-Einheit und bei der Struktureinheit nach Formel Id um eine Maleinsäure- oder eine Maleinsäuremonoester-Einheit.

Soweit die Monomere (I) Phosphorsäureester oder Phosphonsäureester sind, können sie auch die entsprechenden Di- und Triester sowie den Monoester der Diphosphorsäure umfassen. Diese entstehen im allgemeinen bei der Veresterung von organischen Alkoholen mit Phosphorsäure, Polyphosphorsäure, Phosphoroxiden, Phosphorhalogeniden oder Phosphoroxyhalogeniden bzw. den entsprechenden Phosphonsäureverbindungen neben dem Monoester in unterschiedlichen Anteilen, beispielsweise 5-30 Mol-% Diester und 1-15 Mol-% Triester sowie 2-20 Mol-% des Monoesters der Diphosphorsäure.

In einer Ausführungsform weist das polymere Dispergiermittel zumindest eine Struktureinheit der allgemeinen Formeln (IIa), (IIb), (IIc) und/oder (IId) auf. Die allgemeinen Formeln (IIa), (IIb), (IIc) und (IId) können sowohl innerhalb einzelner Polymermoleküle, als auch zwischen verschiedenen Polymermolekülen gleich oder verschieden sein. Alle Struktureinheiten A können sowohl innerhalb einzelner Polyetherseitenketten, als auch zwischen verschiedenen Polyetherseitenketten gleich oder verschieden sein.

(IIa)

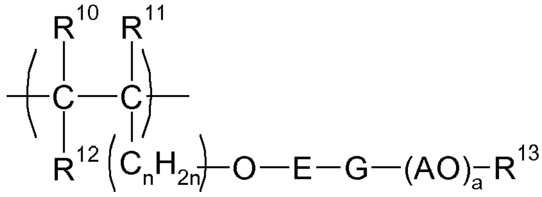

worin
$R^{10}$, $R^{11}$ und $R^{12}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht;
G für O, NH oder CO-NH steht; oder
E und G gemeinsam für eine chemische Bindung stehen;
A für $C_xH_{2x}$ mit x = 2, 3, 4 oder 5oder $CH_2CH(C_6H_5)$, vorzugsweise für 2 oder 3,steht;
n für 0, 1, 2, 3, 4 oder 5, vorzugsweise für 0, 1 oder 2, steht;
a für eine ganze Zahl von 2 bis 350, vorzugsweise 5 bis 150, steht;
$R^{13}$ für H, eine unverzweigte oder verzweigte $C_1$-$C_4$-Alkylgruppe, CO-$NH_2$ und/oder $COCH_3$ steht;

Besonders bevorzugt handelt es sich bei der Struktureinheit nach Formel IIa um eine alkoxylierte Isoprenyl-, alkoxylierte Hydroxybutylvinylether-, alkoxylierte (Meth)allylalkohol-, oder um eine vinylierte Methylpolyalkylenglykol-Einheit, jeweils vorzugsweise mit einem arithmetischen Mittel von 4 bis 340 Oxyalkylengruppen.

(IIb)

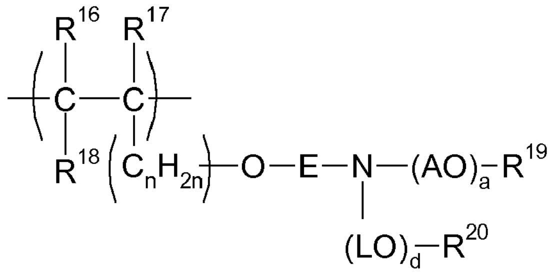

worin
$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;
A für $C_xH_{2x}$ mit x = 2, 3, 4 oder 5oder $CH_2CH(C_6H_5)$, vorzugsweise für 2 oder 3, steht;
n für 0, 1, 2, 3, 4 und/oder 5, vorzugsweise für 0, 1 oder 2, steht;
L für $C_xH_{2x}$ mit x = 2, 3, 4 oder 5oder $CH_2$-$CH(C_6H_5)$, vorzugsweise für 2 oder 3, steht;
a für eine ganze Zahl von 2 bis 350, vorzugsweise 5 bis 150, steht;
d für eine ganze Zahl von 1 bis 350, vorzugsweise 5 bis 150, steht;
$R^{19}$ für H oder eine unverzweigte oder verzweigte $C_1$-$C_4$-Alkylgruppe steht;
$R^{20}$ für H oder eine unverzweigte $C_1$-$C_4$-Alkylgruppe steht;

(IIc)

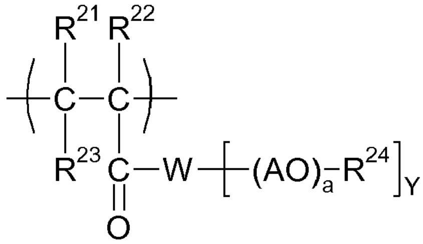

worin
$R^{21}$, $R^{22}$ und $R^{23}$ unabhängig voneinander für H oder eine unverzweigte oder verzweigte $C_1$-$C_4$-Alkylgruppe stehen;
W für O, $NR^{25}$ oder N steht
Y für 1 steht, wenn W = O oder $NR^{25}$, und für 2 steht, wenn W = N;
A für $C_xH_{2x}$ mit x = 2, 3, 4 oder 5oder $CH_2CH(C_6H_5)$, vorzugsweise für 2 oder 3, steht;
a für eine ganze Zahl von 2 bis 350, vorzugsweise 5 bis 150, steht;
$R^{24}$ für H oder eine unverzweigte oder verzweigte $C_1$-$C_4$-Alkylgruppe steht; und
$R^{25}$ für H oder eine unverzweigte oder verzweigte $C_1$-$C_4$-Alkylgruppe steht;

(IId)

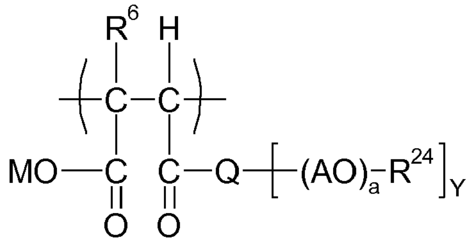

worin
$R^6$ für H oder eine unverzweigte oder verzweigte $C_1$-$C_4$-Alkylgruppe steht;
Q für $NR^{10}$, N oder O steht;
Y für 1 steht, wenn W = O oder $NR^{10}$ und für 2 steht, wenn W = N;
$R^{10}$ für H oder eine unverzweigte oder verzweigte $C_1$-$C_4$-Alkylgruppe steht; und
A für $C_xH_{2x}$ mit x = 2, 3, 4 oder 5, oder $CH_2C(C_6H_5)H$, vorzugsweise für 2 oder 3, steht ,
a für eine ganze Zahl von 2 bis 350, vorzugsweise 5 bis 150, steht; und
M für H oder ein Kationäquivalent steht

Neben den Struktureinheiten der Formeln (I) und (II) kann das polymere Dispergiermittel auch weitere Struktureinheiten enthalten, die sich von radikalisch polymerisierbaren Monomeren ableiten, wie Hydroxyethyl(meth)acrylat, Hydroxypropyl(meth)acrylat, (Meth)acrylamid, ($C_1$-$C_4$)-alkyl(meth)acrylate, Styrol, Styrolsulfonsäure, 2-Acrylamido-2-methylpropansulfonsäure, (Meth)allylsulfonsäure, Vinylsulfonsäure, Vinylacetat, Acrolein, N-Vinylformamid, Vinylpyrrolidon, (Meth)allylalkohol, Isoprenol, 1-Butylvinylether, Isobutylvinylether, Aminopropyvinylether, Ethylenglykolmonovinylether, 4-Hydroxybutylmonovinyl-ether, (Meth)acrolein, Crotonaldehyd, Dibutylmaleat, Dimethylmaleat, Diethylmaleat, Dipropylmaleat, etc.

Das durch Gelpermeationschromatographie (GPC) bestimmte mittlere Molekulargewicht $M_w$ des polymeren Dispergiermittels (Kammpolymers), bevorzugt des wasserlöslichen polymeren Dispergiermittels, beträgt vorzugsweise 5,000 bis 200,000 g/mol, besonders bevorzugt 10,000 bis 80,000 g/mol, und ganz besonders bevorzugt 20,000 bis 70,000 g/mol. Die Polymere wurden mittels Größenausschlusschromatographie auf mittlere Molmasse und Umsatz analysiert (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von $HCO_2NH_4$ (0,05 mol/l) und 20 Vol.-% Acetonitril; Injektionsvolumen 100 $\mu$l; Durchflussrate 0,5 ml/min). Die Kalibrierung zur Bestimmung der mittleren Molmasse erfolgte mit linearen Poly(ethylenoxid)- und Polyethylenglykol-Standards. Als Maß für den Umsatz wird der Peak des Copolymers auf eine relative Höhe von 1 normiert und die Höhe des Peaks des nichtumgesetzten Makromonomer/PEG-haltigen Oligomers als Maß für den Restmonomerengehalt verwendet.

Vorzugsweise erfüllt das polymere Dispergiermittel die Anforderungen der Industrienorm EN 934-2 (Februar 2002).

Die Herstellung der polymeren Dispergiermittel, welche die Struktureinheiten (I) und (II) enthalten, erfolgt in üblicher Weise, beispielsweise durch radikalische Polymerisation. Sie ist z. B. beschrieben in EP0894811, EP1851256, EP2463314, EP0753488.

In einer Ausführungsform ist das polymere Dispergiermittel ein Polykondensationsprodukt, das die Struktureinheiten (III) und (IV) umfasst.

(III)

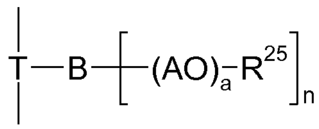

worin
T für einen substituierten oder unsubstituierten Phenyl- oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A für $C_xH_{2x}$ mit x = 2, 3, 4 oder 5 oder $CH_2CH(C_6H_5)$ steht;
a für eine ganze Zahl von 1 bis 300 steht;
$R^{25}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;
wobei die Struktureinheit (IV) ausgewählt ist unter den Struktureinheiten (IVa) und (IVb)

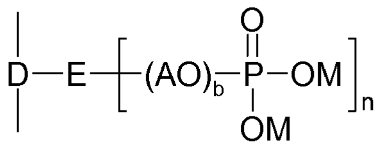

(IVa)

worin
D für einen substituierten oder unsubstituierten Phenyl oder Naphthylrest oder für einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass n für 2 steht, wenn E für N steht und der Maßgabe, dass n für 1 steht, wenn E für NH oder O steht;
A für $C_xH_{2x}$ mit x = 2, 3, 4 oder 5 oder $CH_2CH(C_6H_5)$ steht;
b für eine ganze Zahl von 1 bis 300 steht;
M unabhängig voneinander für H, ein Kationäquivalent steht; und

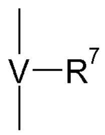

(IVb)

worin
V für einen substituierten oder unsubstituierten Phenyl- oder Naphthylrest steht, wobei V gegebenenfalls durch 1 oder zwei Reste substituiert ist, die unabhängig voneinander ausgewählt sind unter $R^8$, OH, $OR^8$, $(CO)R^8$, COOM, $COOR^8$, $SO_3R^8$ und $NO_2$, vorzugsweise OH, ; $OC_1$-$C_4$-Alkyl und $C_1$-$C_4$-Alkyl;
$R^7$ für COOM, $OCH_2COOM$, $SO_3M$ oder $OPO_3M_2$ steht;
M für H oder ein Kationäquivalent steht; und
$R^8$ für $C_1$-$C_4$-Alkyl, Phenyl, Naphthyl, Phenyl-$C_1$-$C_4$-alkyl oder $C_1$-$C_4$-Alkylphenyl steht.

Die Struktureinheiten T und D in den allgemeinen Formeln (III) und (IV) des Polykondensationsprodukts sind vorzugsweise abgeleitet von Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl, Phenoxyessigsäure, Salicylsäure, vorzugsweise von Phenyl, wobei T und D unabhängig voneinander gewählt werden können und auch jeweils von einer Mischung der genannten Reste abgeleitet sein können. Die Gruppen B und E stehen unabhängig voneinander vorzugsweise für O. Alle Struktureinheiten A können sowohl innerhalb einzelner Polyetherseitenketten, als auch zwischen verschiedenen Polyetherseitenketten gleich oder verschieden sein. A steht in einer besonders bevorzugten Ausführungsform für $C_2H_4$.

In der allgemeinen Formel (III) steht a vorzugsweise für eine ganze Zahl von 3 bis 200 und insbesondere 5 bis 150, und in der allgemeinen Formel (IV) steht b vorzugsweise für eine ganze Zahl von 1 bis 300, insbesondere 1 bis 50 und besonders bevorzugt 1 bis 10. Weiterhin können die Reste der allgemeinen Formeln (III) oder (IV) unabhängig voneinander jeweils die gleiche Kettenlänge besitzen, wobei a und b jeweils durch eine Zahl repräsentiert wird. Es wird dabei in der Regel zweckmäßig sein, wenn jeweils Mischungen mit unterschiedlichen Kettenlängen vorliegen, so dass die Reste der Struktureinheiten im Polykondensationsprodukt für a und unabhängig für b unterschiedliche Zahlenwerte aufweisen.

Häufig weist das erfindungsgemäße Polykondensationsprodukt ein gewichtsmittleres Molekulargewicht von 5.000 g/mol bis 200.000 g/mol, vorzugsweise 10.000 bis 100.000 g/mol und besonders bevorzugt 15.000 bis 55.000 g/mol auf.

Das Molverhältnis der Struktureinheiten (III):(IV) beträgt typischerweise 4:1 bis 1:15 und vorzugsweise 2:1 bis 1:10. Es ist vorteilhaft, über einen relativ hohen Anteil an Struktureinheiten (IV) im Polykondensationsprodukt zu verfügen, da eine verhältnismäßig hohe negative Ladung der Polymere einen guten Einfluss auf die Stabilität der wässrigen kolloiddispersen Zubereitung hat. Das Molverhältnis der Struktureinheiten (IVa):(IVb), wenn beide enthalten sind, beträgt typischerweise 1:10 bis 10:1 und vorzugsweise 1:3 bis 3:1.

In einer bevorzugten Ausführungsform der Erfindung enthält das Polykondensationsprodukt eine weitere Struktureinheit (V), die durch die folgende Formel repräsentiert wird:

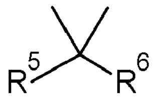

(V)

worin

$R^5$ für H, $CH_3$, COOH oder substituiertes oder unsubstituiertes Phenyl oder Naphthyl steht;

$R^6$ für H, $CH_3$, COOH oder substituiertes oder unsubstituiertes Phenyl oder Naphthyl steht.

Vorzugsweise stehen $R^5$ und $R^6$ für H oder einer der Reste $R^5$ und $R^6$ steht für H und der andere für $CH_3$.

Typischerweise sind $R^5$ und $R^6$ in Struktureinheit (V) gleich oder verschieden und stehen für H, COOH und/oder Methyl. Ganz besonders bevorzugt ist H.

In einer anderen Ausführungsform beträgt das Molverhältnis der Struktureinheiten [(III) + (IV)] : (V) im Polykondensat 2:1 bis 1:3.

Die Polykondensate werden typischerweise nach einem Verfahren hergestellt, bei dem man die Verbindungen miteinander umsetzt, die den Struktureinheiten (III), (IV) und (V) zugrunde liegen. Die Herstellung der Polykondensate ist beispielsweise beschrieben in WO 2006/042709 und WO 2010/026155.

Vorzugsweise ist das Monomer mit einer Ketogruppe ein Aldehyd oder Keton. Beispiele für Monomere der Formel (V) sind Formaldehyd, Acetaldehyd, Aceton, Glyoxylsäure und/oder Benzaldehyd. Formaldehyd ist bevorzugt.

Das erfindungsgemäße polymere Dispergiermittel kann auch in Form seiner Salze, wie beispielsweise des Natrium-, Kalium-, organischen Ammonium-, Ammonium- und/oder Calciumsalzes, vorzugsweise als Natrium- und/oder Calciumsalz, vorliegen.

Bevorzugt enthalten die Additive 50 bis 90 % Wasser und 10 bis 50 % Feststoff, besonders bevorzugt 55 bis 85 % Wasser und 15 bis 45% Feststoff. Der Feststoff umfasst dabei das Polymer sowie das erfindungsgemäße schwerlösliche Salz.

Das erfindungsgemäße Additiv kann als wässriges Produkt in Form einer Lösung, Emulsion oder Dispersion oder in fester Form, beispielsweise als Pulver, nach einem Trocknungsschritt, vorliegen. Der Wassergehalt des Additivs in fester Form beträgt dann bevorzugt weniger als 10 Gew. %, besonders bevorzugt weniger als 5 Gew. %. Es ist auch möglich, einen Teil des Wassers, vorzugsweise bis zu 10 Gew. %, durch organische Lösungsmittel zu ersetzen. Vorteilhaft sind Alkohole wie Ethanol, (Iso)propanol und 1-Butanol, einschließlich seiner Isomere. Auch Aceton kann verwendet werden. Durch den Einsatz der organischen Lösungsmittel lassen sich die Löslichkeit und damit das Kristallisationsverhalten der erfindungsgemäßen Salze beeinflussen.

Die Herstellung der erfindungsgemäßen Additive erfolgt durch Kontaktieren des wasserlöslichen Salzes des mehrwertigen Metallkations und des polymeren Dispergiermittels in wässrigem Medium, in fester Form oder in einer Polymerschmelze. Vorzugsweise verwendet man ein wasserlösliches Salz des mehrwertigen Metallkations. Das Salz des Metallkations kann in fester Form, zweckmäßig aber als wässrige Lösung oder Suspension bereitgestellt werden. Es ist daher möglich, das Salz des mehrwertigen Metallkations als Pulver, als wässrige Lösung oder auch als wässrige Aufschlämmung zu einer wässrigen

Lösung eines Dispergiermittels zu geben.

Verbindung, die ein Anion freizusetzen vermag, kann ebenfalls sowohl in fester Form eingesetzt werden (insitu Herstellung einer Lösung, bzw. Kontaktieren mit der Polymerschmelze), als auch bevorzugt in Form einer wässrigen

Lösung verwendet werden.

Ein erfindungsgemäßes Additiv für hydraulisch abbindende Massen kann dadurch erhalten werden, dass man das schwerlösliche Salz in Gegenwart des polymeren Dispergiermittels fällt, wobei man eine kolloid-disperse Zubereitung des Salzes erhält. Mit der Fällung des schwerlöslichen Salzes ist hier die Bildung von kolloiddispersen Salzpartikeln bezeichnet, die durch das polymere Dispergiermittel dispergiert werden und deren weitere Koagulation verhindert wird.

Unabhängig davon, ob man das Salz des mehrwertigen Metallkations in Gegenwart des polymeren Dispergiermittels fällt oder ob man ein frisch gefälltes Salz des mehrwertigen Metallkations in Gegenwart des polymeren Dispergiermittels dispergiert, kann das erfindungsgemäße Additiv für hydraulisch abbindende Massen alternativ auch dadurch erhalten werden, dass man die Zubereitung zusätzlich mit einem wie oben beschriebenen Neutralisierungsmittel versetzt.

Ein erfindungsgemäßes Additiv für hydraulisch abbindende Massen kann auch dadurch erhalten werden, dass man ein Hydroxid und/oder Oxid des mehrwertigen Metallkations mit einer Säure peptisiert, um eine kolloid-disperse Zubereitung des Salzes des mehrwertigen Metallkations zu erhalten, wobei die Säure vorzugsweise unter Borsäure, Kohlensäure, Oxalsäure, Kieselsäure, Polyphosphorsäure, Phosphorsäure und/oder Phosphoriger Säure ausgewählt ist.

Die Herstellung des Additivs erfolgt im Allgemeinen durch Vermischen der Komponenten, die vorzugsweise als wässrige Lösung vorliegen. Vorzugsweise werden dabei zunächst das polymere Dispergiermittel (Kammpolymer) und das Salz des mehrwertigen Metallkations vermischt und anschließend wird die Verbindung, die das Anion freizusetzen vermag, das mit dem mehrwertigen Metallkation ein schwerlösliches Salz bildet, zugegeben. Nach einer anderen Ausführungsform werden zunächst das polymere Dispergiermittel (Kammpolymer) und die Verbindung, die das Anion freizusetzen vermag, vermischt und anschließend wird das mehrwertige Metallkation zugegeben. Zur Einstellung des pH-Wertes kann dann eine Säure oder Base zugegeben werden. Das Vermischen der Komponenten erfolgt im Allgemeinen bei einer Temperatur im Bereich von 5 bis 80°C, zweckmäßig 10 bis 40°C und insbesondere bei Raumtemperatur (ca. 20-30°C).

Ein erfindungsgemäßes Additiv für hydraulisch abbindende Massen kann auch dadurch erhalten werden, dass man ein frisch gefälltes schwerlösliches Salz in Gegenwart des polymeren Dispergiermittels dispergiert um eine kolloid-disperse Zubereitung des Salzes zu erhalten. Unter frisch gefällt ist hier unmittelbar im Anschluss an die Fällung zu verstehen, solange das Salz im wesentlichen amorph (maximal 30 %, bevorzugt maximal 15% Kristallinität) vorliegt; d.h. innerhalb von etwa fünf Minuten, vorzugsweise innerhalb von ein oder zwei Minuten nach der Fällung.

Als "amorph" werden Feskörper bezeichnet, deren atomare Bausteine nicht in Kristallgittern angeordnet sind, d.h. keine Fernordnung aufweisen, sondern lediglich eine mehr oder minder ausgeprägte Nahordnung aufweisen. Während kristalline Substanzen zahlreiche scharfe Reflexe bei der Beugung von Röntgenstrahlen, Elektronenstrahlen und Neutronenstrahlen zeigen, weisen amorphe Festkörper höchstens wenige diffuse Interferenzringe (Halos) bei kleinen Beugungswinkeln auf.

Die Herstellung kann kontinuierlich oder diskontinuierlich erfolgen. Das Vermischen der Komponenten erfolgt im Allgemeinen in einem Reaktor mit mechanischem Rührwerk. Die Rührgeschwindigkeit des Rührwerks kann dabei zwischen 10 rpm und 2000 rpm liegen. Es ist aber auch möglich, die Lösungen mit Hilfe eines Rotor-Stator Mischers zu vermischen, welcher Rührgeschwindigkeiten im Bereich von 1000 bis 30.000 rpm aufweisen kann. Weiterhin können auch andere Mischgeometrien zur Anwendung kommen, wie z.B. ein kontinuierlicher Prozess bei dem die Lösungen über einen Y-Mischer vermischt werden.

Gegebenenfalls kann sich ein weiterer Verfahrensschritt zur Trocknung des erfindungsgemäßen Additivs anschließen. Die Trocknung kann erfolgen durch Walzentrocknung, Sprühtrocknung, Trocknung im Wirbelbettverfahren, durch Substanztrocknung bei erhöhter Temperatur oder sonstige übliche Trocknungsverfahren. Der bevorzugte Bereich der Trocknungstemperatur liegt zwischen 50 und 230°C.

Das erfindungsgemäße Additiv für hydraulisch abbindende Massen kann als Slump-retainer in wasserhaltigen Baustoffmischungen, die ein hydraulisches Bindemittel enthalten, verwendet werden, wobei das hydraulische Bindemittel ausgewählt ist unter (Portland)zement, Hüttensand, Flugasche, Silikastaub, Metakaolin, natürlichen Puzzolanen, gebranntem Ölschiefer, Calcium-Aluminat-Zement oder Mischungen zweier oder mehrerer dieser Komponenten.

Das erfindungsgemäße Additiv für hydraulisch abbindende Massen ist lagerstabil. Die erhaltenen Zubereitungen zeigen ihre Wirksamkeit als Slump-retainer nach über 6 Monaten noch. In der Regel sind die Zubereitungen darüber hinaus langzeitstabil gegen Phasentrennung.

Die erfindungsgemäßen Additive besitzen hohe Lagerstabilität. Eine "hohe Lagerstabilität" liegt vor, wenn der Parameter "Delta nach 60 min" in einem Standardmörteltest, wie in den Anwendungstests beschrieben, nach 6-monatiger Lagerung des Additivs zumindest 70 % des Wertes für das frisch hergestellte Additiv beträgt.

Weiterhin liegt "hohe Lagerstabilität" vor, wenn die erfindungsgemäßen Zubereitungen sich über einen Zeitraum von 6 Monaten nicht entmischen. Das bedeutet, dass nach 6 Monaten weniger als 2.5 Gew% der Zubereitung als flüssige oder feste Phase abgeschieden sind.

Erfindungsgemäße Additive können auch hergestellt werden, indem man polymere Dispergiermittel mit einem

Anteil mehrwertiger Metallkationen >1 gemäß Formel (a) herstellt und diese mit einem Alkali-neutralisierten polymeren Dispergiermittel in einem Verhältnis vermischt, so dass ein Anteil mehrwertiger Metallkationen <1 gemäß Formel (a) erhalten wird. Dabei sind verschiedene Mischreihenfolgen möglich. So kann das polymere Dispergiermittel mit einem Anteil mehrwertiger Metallkationen >1 gemäß Formel (a) vorgelegt werden und mit einem Alkali-neutralisierten polymeren Dispergiermittel versetzt werden, oder umgekehrt. Weiterhin ist es auf diesem Weg möglich verschiedene polymere Dispergiermittel zu vermischen. Zum Beispiel kann ein erstes Alkali-neutralisiertes polymeres Dispergiermittel mit einem zweiten polymeren Dispergiermittel, das andere Struktureinheiten oder eine andere Zusammensetzung der Struktureinheiten als das erste polymere Dispergiermittel und ein Anteil mehrwertiger Metallkationen >1 gemäß Formel (a) aufweist, zu einem erfindungsgemäßen Additiv vermischt werden.

Die Dosiergeschwindigkeiten der einzelnen Komponenten während der Synthese des erfindungsgemäßen Additivs sind wichtige Parameter. Es ist besonders bevorzugt, die Komponenten mit hoher Geschwindigkeit zu dosieren. So liegen die im Labor typischen Dosiergeschwindigkeiten der einzelnen Komponenten zwischen 0.01 mL/s und 1000 mL/s. Diese Größen lassen sich unter der Maßgabe üblicher Fördertechniken bis auf Multitonnenproduktionsniveau skalieren, wobei die obere Grenze der Dosiergeschwindigkeit bei mindestens 100 $m^3$/h liegt.

Unter dem Begriff des Slump-retainers ist in dieser Anmeldung zu verstehen, dass die Additive über eine Verarbeitungszeit von bis zu 90 Minuten, bevorzugt bis zu 60 Minuten, nach Vermischen der Baustoffmischung mit Wasser ein möglichst für die Bedingungen des jeweiligen Anwendungsfalls ausreichendes, möglichst hohes und insbesondere über den vorstehend genannten Zeitraum im Wesentlichen nicht abfallendes Setzmaß der Bindemittelsuspension bewirken. Die Additive ermöglichen es, ein für die jeweilige Anwendung maßgeschneidertes Eigenschaftsprofil einzustellen. Außerdem ist es möglich, das Additiv nicht erst bei der Mörtel- oder Betonherstellung sondern bereits bei der Zementherstellung zuzugeben. Es erfüllt dann gleichzeitig die Funktion eines Mahlhilfsmittels.

Die Betonadditive können zusätzlich zur erfindungsgemäßen kolloid-dispersen Zubereitung aus polymerem Fließmittel, mehrwertigem Metallkation und erfindungsgemäßem Anion noch weitere Komponenten enthalten. Diese weiteren Komponenten umfassen wasserreduzierende Fließmittel wie z.B. Ligninsulfonat, Naphthalinsulfonat Kondensate, sulfonierte Melaminharze, oder konventionelle Polycarboxylatether, sowie Entschäumer, Luftporenbildner, Verzögerer, Schwundreduzierer und/oder Erhärtungsbeschleuniger.

Die Erfindung betrifft auch eine Baustoffmischung, die mindestens ein erfindungsgemäßes Additiv und mindestens ein Bindemittel enthält. Das Bindemittel ist vorzugsweise ausgewählt unter (Portland)zement, Hüttensand, Flugasche, Silikastaub, Metakaolin, natürlichen Puzzolanen, gebranntem Ölschiefer, Calcium-Aluminat-Zement und Gemischen davon. Weiter kann die Baustoffmischung übliche Bestandteile enthalten, wie Härtungsbeschleuniger, Härtungsverzögerer, Clay modifier, Schrumpfreduzierer, Korrosionsinhibitoren, Mittel zur Erhöhung der Festigkeit, Wasserreduzierer etc.

Die Dosierung an erfindungsgemäßem Additiv beträgt im allgemeinen 0.1 bis 4 Gew.-% als Feststoff, und bezogen auf den Zementgehalt der Baustoffmischung. Dabei kann die Dosierung als wässrige kolloid-disperse Zubereitung erfolgen oder als getrockneter Feststoff, z.B. in Form eines Pulvers.

## Beispiele

### Gelpermeationschromatographie

Die Probenpräparation für die Molgewichtsbestimmung erfolgte durch Lösen von Polymerlösung im GPC Eluent, so dass die Polymerkonzentration im GPC-Eluent 0.5 Gew.-% beträgt. Danach wurde diese Lösung über einen Spritzenvorsatzfilter mit Polyethersulfonmembran und Porengröße 0.45 μm filtriert. Das Injektionsvolumen dieses Filtrats betrug 50 - 100 μl.

Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).

| | |
|---|---|
| Säulen: | Shodex SB-G Guard Column for SB-800 HQ series |
| | Shodex OHpak SB 804HQ and 802.5HQ (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 ml/min |
| Temperatur: | 50° C |
| Injektion: | 50 bis 100 μl |
| Detektion: | RI und UV |

Die Molekulargewichte der Polymere wurden mit zwei unterschiedlichen Kalibrierungen bestimmt. Erstens

erfolgte die Bestimmung relativ zu Polyethylenglykol Standards der Firma PSS Polymer Standards Service GmbH. Die Molekulargewichtsverteilungskurven der Polyethylenglykolstandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol.

**Polymersynthese**

Das polymere Dispergiermittel P1 basiert auf den Monomeren Maleinsäure, Acrylsäure und Vinyloxybutylpolyethyleneglykol - 5800. Das molare Verhältnis von Acrylsäure zu Maleinsäure beträgt 7. Mw = 40.000 g/mol (durch GPC bestimmt). Der Feststoffgehalt beträgt 45 Gew. %. Die Synthese ist zum Beispiel in EP0894811 beschrieben.

Das polymere Dispergiermittel P2 ist ein Kondensat aus den Bausteinen PhenolPEG5000 und Phenoxyethanolphosphat. Das Molekulargewicht beträgt 23.000 g/mol. Die Synthese ist beschrieben in DE102004050395. Der Feststoffgehalt beträgt 31%.

Phosphorsäureesterhaltiges polymeres Dispergiermittel P3 In einem Glasreaktor, ausgestattet mit Rührer, Thermometer, pH-Elektrode und mehreren Zulaufeinrichtungen, wurden 180 g deionisiertes Wasser vorgelegt und auf eine Polymerisationsstarttemperatur von 80 °C temperiert (Vorlage). In einem separaten Zulaufgefäß wurden 4.669 g (240 mmol) einer 25,7% igen wässrigen Methylpolyethylenglykol(5.000)methacrylsäureester Lösung mit 251,8 g (1198 mmol) Hydroxyethylmethacrylatphosphorsäureester (HEMA - Phosphat) und 190,2 g einer 20%igen NaOH Lösung (entspricht Lösung A) vermischt. In einem weiteren separaten Zulaufgefäß wurden 13,71 g Natriumperoxodisulfat mit 182,1 g Wasser vermischt (Lösung B). In einem dritten Zulauf wurde mit 13,2 g 2-Mercaptoethanol und 39,6 g deionisiertem Wasser eine 25%ige Lösung hergestellt (Lösung C).

Nach Herstellung von Lösung A, B und C wurde zeitgleich mit der Zugabe aller drei Lösungen zur gerührten Vorlage begonnen. Dabei wurden alle Zugaben über einen Zeitraum von 60 Minuten linear in die Vorlage dosiert.

Nach Beendigung der Zugabe wurde die Temperatur für weitere 30 Minuten auf 80°C gehalten, danach ließ man die Lösung abkühlen und es wurde mit 158 g 50%iger Natronlauge auf pH 7,3 neutralisiert. Das erhaltene Copolymer fiel als klare Lösung an, die einen Feststoffgehalt von 27,8 % aufwies. Das mittlere Molekulargewicht des Copolymers lag bei Mw 39.000 g/Mol, Mp 34.000 g/Mol und die Polydispersität betrug 1.55.

Das verwendete HEMA-Phosphat wird durch Vermischen von Polyphosphorsäure mit HEMA hergestellt, dabei werden 156 g HEMA und 141,6g Polyphosphorsäure vermischt. Das bedeutet, dass der Anteil des reinen HEMA-Phosphat an der Reaktionsmischung 251,8 g beträgt.

Beispielhafte Berechnung der Ladungsdichte:

$$\frac{\sum_j n_{s,j}}{m_{Polymer}} \text{ einpolymerisierte Säuremonomere pro Gramm Polymer}$$

$$= \frac{\text{n(Molzahl Einwaage Säuremonomere in mmol)}}{\text{m(Masse Polymerlösung in g)} \cdot \text{Feststoffgehalt der Polymerlösung in \%}}$$

Beispielberechnung für Polymer P3 (Einwaagen siehe Polymersynthese):

$$\frac{\sum_j n_{s,j}}{m_{Polymer}} = \frac{(1198\ mmol)}{(5743\ g \cdot 27{,}8\,\%/100)} = 0{,}75\ mmol/g$$

Beispielhafte Berechnung von Formel (a) anhand Beispiel 478:

Aus der Einwaagentabelle werden die entsprechenden Massen entnommen: Masse Polymer P3 26,1 g und Masse Eisennitrat Nonahydrat 4,3 g.

Somit

$$\frac{\sum_i z_{K,i} \times n_{K,i}}{\sum_j z_{s,j} \times n_{s,j}} = \frac{(4{,}3\ g/0{,}404\ g/mmol)\ \cdot 3)}{(26{,}1\ g/0{,}75\ mmol/g \cdot 2)}$$

Tab. 1: Physikalische Daten der Referenzpolymere

| | P1 | P2 | P3 |
|---|---|---|---|
| $\sum_j Z_{S,j} \times n_{s,j}$ in mmol pro Gramm Polymer | 0,93 | 0,745 | 1,38 |
| Mw (GPC) | 40000 | 23000 | 34000 |

Beispiele zur Herstellung der erfindungsgemäßen Additive

Allgemeine Vorschrift:

Die wässrigen Lösungen der polymeren Dispergiermittel werden erfindungsgemäß mit den Salzen mehrwertiger Metallkationen, mit der Verbindung, die das Anion freizusetzen vermag, sowie ggf. einer Base oder Säure zum Anpassen des pH Werts unter Rühren vermischt. Die Vermischung wurde in einem auf 20°C temperierten 1l Doppelmantel-Glasreaktor mit Flügelrührer mit 300 U/min durchgeführt. Die Reihenfolge der Zugabe ist in der Tabelle 2 durch einen Buchstabencode angegeben. P steht für die wässrige Lösung des polymeren Dispergiermittels, K für das erfindungsgemäße Salz des mehrwertigen Metallkations, A für die erfindungsgemäße Verbindung, die ein Anion freizusetzen vermag und B bzw. S für Base bzw. Säure. Die Mengen beziehen sich immer auf die Nettogehalte. Der finale pH Wert der resultierenden Lösungen bzw. Suspensionen ist ebenfalls angegeben.
Die Lösung des polymeren Dispergiermittels wird in einen Becher mit Magnetrührer vorgelegt und mit der angegebenen Masse Wasser (siehe Tabelle 2) verdünnt. Anschließend wurde das erfindungsgemäße Salz des mehrwertigen Metallkations (Mengen siehe Tabelle) zugegeben und unter Rühren mit einen Magnetfisch bei ca. 200 rpm gelöst. Die Verbindung, die das Anion freizusetzen vermag, wurde unter Rühren zugegeben. Gegebenenfalls wird mit einer Base der pH-Wert auf pH 7 eingestellt. Es bildeten sich dabei viskose Suspensionen.

Die Suspensionen sind lagerstabil.

Proben von Beipiel 12 und Beispiel 13 wurden 6 Monate bei je 20°C und 4°C, sowie Normaldruck gelagert. Dabei erwiesen sich die Additive als stabil gegen Phasentrennung und behielten Ihre Wirkung als Slump-retainer bei.

Allgemeine Vorschrift Sprühtrocknung

Die erfindungsgemäßen Additive können durch Sprühtrocknung in Pulverform überführt werden. Dabei werden die wässrigen Lösungen bzw. Suspensionen der erfindungsgemäßen Additive mit einem Sprühtrockner Modell Mobil Minor (Firma GEA Niro) bei einer Eingangstemperatur von 230°C und einer Ausgangstemperatur von 80°C getrocknet. Dafür wurden die wässrigen Lösungen zuvor mit 1 Gew% (bezogen auf den Feststoffgehalt der wässrigen Lösung) einer Mischung aus Additin RC 7135 LD (Rhein Chemie GmbH) und MPEG500 (jeweils 50 Gew%) versetzt. Die erhaltenen Pulver werden mit 1 Gew.% hochdisperser Kieselsäure (N20P, Wacker Chemie AG) versetzt, mit einer Retsch Grindomix RM 200 Mühle für 10s bei 8.000 rpm gemahlen und über ein 500 μm Sieb filtriert.

Tab. 2: Zusammensetzung der Additive

| Nr | Polymer | Metall-Salz | Anion-Verb. | Base / Säure | pH | Reihenfolge | Wasser (Gew%) | Polymer (Gew%) | Metall-Salz (Gew%) | Anion-Verb. (Gew%) | Base / Säure (Gew%) | $\frac{\sum_i z_{K,i} * n_{K,i}}{\sum_j z_{S,j} * n_{S,j}}$ | $\frac{\sum_l z_{A,l} \times n_{A,l}}{\sum_j z_{K,i} \times n_{K,i}}$ |
|---|---|---|---|---|---|---|---|---|---|---|---|---|---|
| **1** | P2 | $Al(NO_3)_3x9H_2O$ | $H_3PO_4$ | NaOH | 7,2 | PAKB | 64 | 33,6 | 1,5 | 0,6 | 0,4 | 0,47 | 1,25 |
| **2** | P2 | $Al(NO_3)_3x9H_2O$ | $H_3PO_4$ | NaOH | 7,6 | PAKB | 64 | 32,9 | 2,4 | 0,5 | 0,6 | 0,78 | 0,75 |
| **3** | P2 | $Fe(NO_3)_3x9H_2O$ | $H_3PO_4$ | $NH_4OH$ | 7,6 | PAKB | 63,6 | 33,8 | 1,6 | 0,6 | 0,4 | 0,47 | 1,25 |
| **4** | P2 | $Fe(NO_3)_3x9H_2O$ | $H_3PO_4$ | $NH_4OH$ | 5,5 | PAKB | 63,6 | 33,7 | 1,6 | 0,6 | 0,5 | 0,47 | 1,25 |
| **5** | P2 | $Ca(NO_3)_2$ | $H_3PO_4$ | NaOH | 7,0 | PAKB | 63,4 | 33,7 | 2,1 | 0,6 | 0,2 | 0,52 | 1,12 |
| **6** | P2 | $Ca(NO_3)_2$ | $H_3PO_4$ | NaOH | 6,7 | PAKB | 62,5 | 32,9 | 3,7 | 0,5 | 0,3 | 0,94 | 0,62 |
| **7** | P3 | $Fe(NO_3)_3x9H_2O$ | $H_3PO_4$ | $NH_4OH$ | 5,4 | PAKB | 68,0 | 26,1 | 4,3 | 1,4 | 0,3 | 0,81 | 1,02 |
| **8** | P1 | $Ca(NO_3)_2$ | $H_3PO_4$ | NaOH | 10,5 | PKAB | 74,1 | 23,5 | 1,6 | 0,3 | 0,5 | 0,89 | 0,38 |
| **9** | P3 | $Fe(NO_3)_3x9H_2O$ | $H_3PO_4$ | $NH_4OH$ | 3,7 | PAKB | 70,0 | 24,3 | 4,4 | 0,9 | 0,4 | 0,95 | 0,72 |
| **10** | P3 | $Ca(NO_3)_2$ | $H_3PO_4$ | - | | PAKB | 72,3 | 23,8 | 2,5 | 0,8 | 0,5 | 0,92 | 0,74 |
| **11** | P1 | $Fe(NO_3)_3x9H_2O$ | $H_3PO_4$ | - | 11 | PAK | 74 | 24,2 | 1,5 | 0,3 | | 0,94 | 0,36 |
| **12*** | P2 | $Al(NO_3)_3x9H_2O$ | $H_3PO_4$ | - | 3,8 | PAK | 76,5 | 21,3 | 1,8 | 0,4 | | 0,92 | 0,64 |
| **13*** | P2 | $Al(NO_3)_3x9H_2O$ | $H_3PO_4$ | - | 6,2 | PAK | 77,4 | 21,6 | 0,9 | 0,4 | | 0,47 | 1,25 |
| **14** | P3** | $Ca(NO_3)_2$ | $H_3PO_4$ | NaOH | 8,8 | PKAB | 72,3 | 24,3 | 2,6 | 0,3 | 0,6 | 0,92 | 0,23 |
| **15** | P2** | $Ca(NO_3)_2$ | $H_3PO_4$ | NaOH | 8,4 | PKAB | 73,4 | 25,4 | 0,8 | 0,1 | 0,3 | 0,52 | 0,38 |
| **16** | P1 | $Fe(NO_3)_3x9H_2O$ | $H_3PO_4$ | NaOH | 6,0 | PKAB | 73,2 | 24,2 | 2,0 | 0,3 | 0,3 | 0,67 | 0,5 |
| **17** | P1 | $Ca(NO_3)_2$ | $H_3PO_4$ | NaOH | 8,6 | PKAB | 74,0 | 23,1 | 1,6 | 0,6 | 0,8 | 0,89 | 0,75 |
| **18***** | P1 | $Ca(NO_3)_2$ | $H_3PO_4$ | NaOH | 9 | PKAB | 73,3 | 22,6 | 2,6 | 0,5 | 0,8 | 1,48 | 0,45 |
| **19** | 50% 18 + 50% P1 | $Ca(NO_3)_2$ | $H_3PO_4$ | | | | | | | | | 0,74 | 0,22 |
| **20** | 40% 18 + 60% P1 | $Ca(NO_3)_2$ | $H_3PO_4$ | | | | | | | | | 0,59 | 0,18 |
| **21*** | | $Ca(NH_2SO_3)_2$ | $H_3PO_4$ | NaOH | 9 | PKAB | | 88,6 | 8,6 | 0,9 | 0,5 | 0,89 | 0,38 |

* 6 Monate alte Proben; **: dialysierte Probe um Phosphat aus Monomerlösung zu entfernen; *** nicht erfindungsgemäßes Beispiel; #: sprühgetrocknete Probe;

Betontests

Als Betontests wurden Standardbetontests nach DIN EN 12350 mit einem Zement-Gehalt von 380 kg durchgeführt. Die eingestellte Sieblinie entspricht der Klassifizierung A/B 16 gemäß DIN 1045-2.
Bei den verwendeten Zementen handelte es sich um Karlstadt CEM I 42.5 R mit einem w/z Wert von 0.47, sowie Bernburg CEM I 42.5 R mit w/z von 0.44.
Vor der Austestung im Beton wurden die Polymerproben mit 1-Gew.% Trüsobutylphosphat bezogen auf den Polymerfeststoffgehalt entschäumt.

Mischprozess

Die getrockneten Zuschläge gemäß Sieblinie und der Zement wurden in einen Zwangsmischer vorgelegt und für 10 Sekunden vermischt. Danach wurde die Mischung im Zwangsmischer mit 10% des Gesamtwassers angefeuchtet und für weitere 2 Minuten gemischt. Anschließend wurde das restliche Wasser zugegeben und für eine weitere Minute gemischt. Schließlich wurde das Additiv zugegeben, woraufhin erneut für 1 Minute gemischt wurde.
Der Slump-Wert ist ein Maß dafür, wie stark der Betonkuchen nach dem Abheben des Metallkonus kollabiert (Höhendifferenz zwischen der Oberkante des Metallkonus und der Höhe des Betonkuchens nach dem Abziehen der Metallform). Der Slump-flow entspricht dem Basisdurchmesser des Betonkuchens nach dem Zusammensacken.
Das Ausbreitmaß erhält man, indem der Ausbreittisch, gemäß dem vorstehend genannten DIN-Verfahren, durch 15-maliges Anheben und Aufstoßen erschüttert wird. Die durch das Klopfen auftretenden Scherkräfte bewirken ein weiteres Ausbreiten des Betons. Der Durchmesser des Betonkuchens nach dem Klopfen wird als Ausbreitmaß bezeichnet.
Die angegebenen Dosierungen (Dos. %) beziehen sich auf den Feststoffgehalt der eingesetzten Additive.

Tabelle 3: Ergebnisse der Betontests, Zement: Bernburg CEM I 42,5 R, w/z = 0.44

| Bsp. | Additiv | Dos. % | Luft % | Slump (Setzmaß) in cm | | | | Slump flow (Fließmaß) in cm | | | | Ausbreitmaß in cm | | | | Delta Ausbreitmaß relativ zu Basispolyer | | Druckfestigkeit MPa |
|---|---|---|---|---|---|---|---|---|---|---|---|---|---|---|---|---|---|---|
| | | | | 0 min | 10 min | 30 min | 60 min | 0 min | 10 min | 30 min | 60 min | 0 min | 10 min | 30 min | 60 min | 10-0 min | 30-0 min | 24h |
| V1 | P1 | 0,11 | 2,9 | 20,5 | 8,0 | 2,0 | | 33,0 | 21,0 | 20,0 | | 56,0 | 45,0 | 36,5 | | | | 25,60 |
| 19 | Mischung 40 Gew% 18 / 60 Gew% P1 | 0,15 | 2,2 | 21,0 | 20,0 | 5,5 | 1,0 | 35,0 | 31,5 | 21,0 | 20,0 | 57,5 | 54,5 | 41,0 | 34,0 | +9,5 | +4,5 | |
| 20 | Mischung 50 Gew% 18 / 50 Gew% P1 | 0,17 | 1,8 | 22,0 | 22,0 | 8,0 | 1,5 | 37,0 | 36,5 | 22,0 | 20,0 | 57,5 | 57,5 | 45,0 | 36,0 | +12,5 | +8,5 | 29,7 |
| 8 | P1 | 0,17 | 1,8 | 17,0 | 22,5 | 15,0 | 2,5 | 29,0 | 41,0 | 27,5 | 20,5 | 54,0 | 60,0 | 51,5 | 41,0 | +15,0 | +15,0 | 28,1 |

Anwendungstests

Mörteltests

Als Mörteltests wurden Standardmörteltests nach DIN EN 1015-3 mit Karlstadt CEM I 42.5 R (w/z 0.44) und Bernburg CEM I 42.5 R (w/z 0.42) verwendet. Das Gewichtsverhältnis von Sand zu Zement betrug 2.2 zu 1. Es wurde eine Mischung aus 70-Gew.% Normensand (Normensand GmbH, D-59247 Beckum) und 30 Gew.% Quarzsand verwendet. Vor der Austestung im Mörtel wurden die Additivproben mit 1 Gew.% Trüsobutylphosphat, bezogen auf den Polymerfeststoffgehalt, entschäumt.

Mischprozess

Zum vorgelegten Wasser wird Zement gefüllt. Dies definiert den Zeitpunkt 0s. Anschließend wird 30s auf Stufe 1 gerührt. Daraufhin wird der Sand zugegeben und weitere 30s bei Stufe 1 (140 rpm) und weitere 30 s bei Stufe 2 (285 rpm) gerührt. Dann wird das Rühren für 90s unterbrochen. In diesem Zeitintervall wird das Fließmittel (entweder als wässrige Zubereitung oder als Pulver) zugegeben. Wird die wässrige Fließmittelzubereitung hinzugegeben, so wird das zugefügte Wasser entsprechend von der Menge des Anmachwassers abgezogen. Schließlich wird nochmal 60s bei Stufe 2 gerührt. Nach somit 4 Minuten Gesamtmischzeit wird das erste Ausbreitmaß bestimmt.

Das Ausbreitmaß wurde erhalten, indem der Ausbreittisch, gemäß dem o.g. DIN-Verfahrens, durch 15-maliges Anheben und Aufstoßen (Klopfen) erschüttert wurde. Der Durchmesser des Mörtelkuchens nach dem Klopfen wird als Ausbreitmaß bezeichnet.

Mit Delta ist die Differenz des Ausbreitmaßes mit erfindungsgemäßem Additiv gegenüber dem Ausbreitmaß eines Vergleichmörteltests bezeichnet. In Vergleichsmörteltests wurde jeweils das im erfindungsgemäßen Additiv enthaltene polymere Dispergiermittel als Additiv verwendet.

Die angegebenen Dosierungen beziehen sich auf den Feststoffgehalt der eingesetzten Polymersuspensionen.

Tab. 4: Mörtelergebnisse, Karlstadt Zement, w/z 0.44

| Additiv Nr. | Basispolymer | Dos. [%] | Ausbreitmaß [cm] | | | | | Delta [cm] |
|---|---|---|---|---|---|---|---|---|
| | | | 4 min | 10 min | 30 min | 60 min | 90 min | |
| P1 | | 0,105 | 25,4 | 24,6 | 22,1 | 20,7 | | |
| P2 | | 0,16 | 24,6 | 25,4 | 23,2 | 21,9 | 20,5 | |
| P3 | | 0,14 | 23,2 | 22,3 | 20,9 | 20,3 | | |
| 1 | P2 | 0,17 | 22,8 | 24,1 | 23,2 | 22,3 | 21,2 | +0,4 (90 min) |
| 2 | P2 | 0,20 | 23 | 24,8 | 24,3 | 23,2 | 22,2 | +1,7 (90 min) |
| 3 | P2 | 0,19 | 22,5 | 23,4 | 23,2 | 22,1 | 21,4 | +0,9 (90 min) |
| 4 | P2 | 0,265 | 21,3 | 23,2 | 24,1 | 24,5 | 24,2 | +3,7 (90 min) |
| 5 | P2 | 0,20 | 22,9 | 25,7 | 25,4 | 24,7 | 23,3 | +2,8 (90 min) |
| 6 | P2 | 0,34 | 21,2 | 23,1 | 23,6 | 22,9 | 21,7 | +1,2 (90 min) |
| 7 | P3 | 0,14 | 22,4 | 24,2 | 24,7 | 24,6 | 23,8 | +4,3 (60 min) |
| 8 | P1 | 0,15 | 24,6 | 25,7 | 26,3 | 26,7 | 25,8 | +6,0 (60min) |
| 11 | P1 | 0,14 | 22,8 | 24,3 | 24,2 | 24,7 | 24,4 | +4,0 (60min) |
| 9 | P3 | 0,23 | 21,2 | 23,4 | 27,5 | 28,3 | 27,4 | +8,0 (60 min) |
| 10 | P3 | 0,22 | 21,2 | 22,3 | 23,8 | 24,2 | 23,4 | +3,9 (60min) |
| 12 | P2 | 0,26 | 20 | 22,5 | 24,2 | 24,8 | 24,7 | +4,2 (90 min) |
| 13 | P2 | 0,22 | 24,3 | 28,2 | 27,8 | 28 | 27,3 | +6,8 (90 min) |

Tab. 5: Mörtelergebnisse Bernburg Zement, w/z 0.42

| Additiv Nr. | Basispolymer | Dosierung [%] | Ausbreitmaß [cm] | | | | | Delta [cm] 30 min |
|---|---|---|---|---|---|---|---|---|
| | | | 4 min | 10 min | 30 min | 60 min | 90 min | |
| P1 | | 0,105 | 25,4 | 20,5 | 18,2 | | | |
| P2 | | 0,165% | 26,2 | 24,8 | 20,7 | | | |
| P3 | | 0,14% | 24,4 | 22,1 | 19,2 | | | |
| 4 | P2 | 0,26% | 21,8 | 23,1 | 22 | 20,7 | | + 1,3 |
| 6 | P2 | 0,30% | 24,3 | 23,4 | 21,6 | 20,7 | | + 0,9 |
| 7 | P1 | 0,14% | 23,7 | 22,6 | 20,5 | | | +2,3 |
| 14 | P3 | 0,18% | 19,4 | 22,4 | 26,3 | 24,8 | 24,1 | +7,1 |
| 15 | P2 | 0,20% | 26,3 | 26,6 | 23,8 | 21,9 | 20 | +3,1 |
| 16 | P1 | 0,14% | 25,3 | 24,5 | 22,7 | 21,1 | 19,3 | +4,5 |
| 17 | P1 | 0,17% | 26,4 | 25,6 | 24,7 | 22,7 | 21,1 | +6,5 |
| 21* | P1 | 0,15% | 25,8 | 24 | 21,6 | | | +3,4 |
| *: Pulverförmiges erfindungsgemäßes Additiv | | | | | | | | |

Wie die Mörtelergebnisse zeigen, ergeben die erfindungsgemäßen Additive durchweg längere Konsistenzhaltung, verglichen mit den unmodifizierten polymeren Dispergiermitteln.

**Patentansprüche**

1. Additiv für hydraulisch abbindende Massen, umfassend eine wässrige kolloid-disperse Zubereitung wenigstens eines wasserlöslichen Salzes eines mehrwertigen Metallkations, wenigstens einer Verbindung, die ein Anion freizusetzen vermag, das mit dem mehrwertigen Metallkation ein schwerlösliches Salz bildet, und wenigstens eines polymeren Dispergiermittels, das anionische und/oder anionogene Gruppen und Polyetherseitenketten umfasst,
wobei das mehrwertige Metallkation ausgewählt ist unter $Al^{3+}$, $Fe^{3+}$, $Fe^{2+}$, $Zn^{2+}$, $Mn^{2+}$, $Cu^{2+}$, $Mg^{2+}$, $Ca^{2+}$, $Sr^{2+}$, $Ba^{2+}$ und Gemischen davon,
wobei das Metallkation in solcher Menge vorliegt, dass das folgende Verhältnis nach Formel (a) größer als 0 und kleiner oder gleich 1 ist:

$$0 < \frac{\sum_i z_{K,i} \times n_{K,i}}{\sum_j z_{S,j} \times n_{S,j}} \leq 1 \quad \text{(a)}$$

und wobei
$Z_{K,i}$ für den Betrag der Ladungszahl des mehrwertigen Metallkations steht, $n_{K,i}$ für die Molzahl des mehrwertigen Metallkations steht,
$z_{s,j}$ für den Betrag der Ladungszahl der im polymeren Dispergiermittel enthaltenen anionischen und anionogenen Gruppe steht, und
$n_{s,j}$ für die Molzahl der im polymeren Dispergiermittel enthaltenen anionischen und anionogenen Gruppe steht,
die Indices i und j voneinander unabhängig und eine ganze Zahl größer als 0 sind, wobei i für die Anzahl verschiedenartiger mehrwertiger Metallkationen steht und j für die Anzahl verschiedenartiger im polymeren Dispergiermittel enthaltener anionischer und anionogener Gruppen steht.

2. Additiv nach Anspruch 1, wobei das mehrwertige Metallkation und das Anion in Mengen vorliegen, die nach folgenden Formeln berechnet werden:

$$0 < \frac{\sum_i z_{K,i} \times n_{K,i}}{\sum_j z_{s,j} \times n_{s,j}} \leq 1 \quad \text{(a)}$$

$$0 < \frac{\sum_l z_{A,l} \times n_{A,l}}{\sum_j z_{K,i} \times n_{K,i}} \leq 3 \quad \text{(b)}$$

wobei
$z_{K,i}$ für den Betrag der Ladungszahl des mehrwertigen Metallkations steht, $n_{K,i}$ für die Molzahl des mehrwertigen Metallkations steht,
$z_{s,j}$ für Ladungszahl der im polymeren Dispergiermittel enthaltenen anionischen und anionogenen Gruppen steht,
$n_{s,j}$ für die Molzahl der im polymeren Dispergiermittel enthaltenen anionischen und anionogenen Gruppen steht,
$z_{A,l}$ für die Ladungszahl des Anions steht,
$n_{A,l}$ für die Molzahl des Anions steht,
die Indices i, j und l voneinander unabhängig und eine ganze Zahl größer als 0 sind, i für die Anzahl verschiedenartiger mehrwertiger Metallkationen steht, j für die Anzahl verschiedenartiger im polymeren Dispergiermittel enthaltener anionischer und anionogener Gruppen steht, und l für die Anzahl verschiedenartiger Anionen, welche mit dem Metallkation ein schwerlösliches Salz zu bilden vermögen, steht.

3. Additiv nach Anspruch 1 oder 2, wobei das Anion ausgewählt ist unter Carbonat, Oxalat, Silikat, Phosphat, Polyphosphat, Phosphit, Borat, Aluminat und Sulfat.

4. Additiv nach einem der vorhergehenden Ansprüche, wobei das mehrwertige Metallkation und das Anion in Mengen vorliegen, die nach folgender Formel berechnet werden:

$$0{,}25 < \frac{\left(\sum_i z_{K,i} \times n_{K,i}\right)^2}{\left(\sum_l z_{A,l} \times n_{A,l}\right)\left(\sum_j z_{s,j} \times n_{s,j}\right)} < 25 \quad \text{(c)}$$

5. Additiv nach einem der vorhergehenden Ansprüche, zusätzlich umfassend wenigstens ein Neutralisierungsmittel.

6. Additiv nach Anspruch 5, wobei das Neutralisierungsmittel ein Alkalimetallhydroxid, ein organisches Monoamin, ein organisches Diamin, ein organisches Polyamin oder Ammoniak ist.

7. Additiv nach einem der vorhergehenden Ansprüche, das einen pH-Wert von 2 bis 11,5 aufweist.

8. Additiv nach einem der vorhergehenden Ansprüche, wobei das polymere Dispergiermittel als anionische oder anionogene Gruppe zumindest eine Struktureinheit der allgemeinen Formeln (Ia), (Ib), (Ic) und/oder (Id) aufweist:

(Ia)

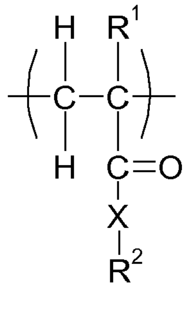

worin
$R^1$ für H oder eine unverzweigte oder verzweigte $C_1$-$C_4$-Alkylgruppe, $CH_2COOH$ oder $CH_2CO$-X-$R^2$ steht;

X für $NR^7$-$(C_nH_{2n})$ oder O-$(C_nH_{2n})$ mit n = 1, 2, 3 oder 4 steht, wobei das Stickstoffatom bzw. das Sauerstoffatom an die CO-Gruppe gebunden ist;
$R^2$ für $PO_3M_2$, O-$PO_3M_2$, $(C_6H_4)$-$PO_3M_2$ oder $(C_6H_4)$-$OPO_3M_2$ steht;
oder X für eine chemische Bindung und $R^2$ für OM stehen;
$R^7$ für H, $C_1$-$C_6$-Alkyl, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_2n)$-O-$(AO)_\alpha$-$R^9$ steht;
$\alpha$ für eine ganze Zahl von 1 bis 350 steht; und
$R^9$ für H oder eine unverzweigte oder verzweigte $C_1$-$C_4$-Alkylgruppe steht;

(Ib)

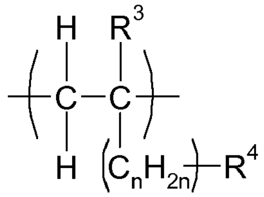

worin
$R^3$ für H oder eine unverzweigte oder verzweigte $C_1$-$C_4$-Alkylgruppe steht;
n für 0, 1, 2, 3 oder 4 steht;
$R^4$ für $PO_3M_2$, oder O-$PO_3M_2$ steht;

(Ic)

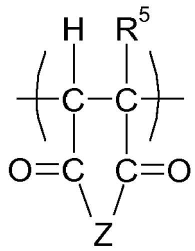

worin
$R^5$ für H oder eine unverzweigte oder verzweigte $C_1$-$C_4$-Alkylgruppe steht;
Z für O oder $NR^7$ steht; und
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht,
n für 1, 2, 3 oder 4 steht;

(Id)

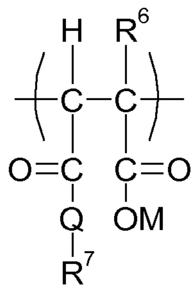

worin
$R^6$ für H oder eine unverzweigte oder verzweigte $C_1$-$C_4$-Alkylgruppe steht;
Q für $NR^7$ oder O steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\alpha$-$R^9$

steht,
A für $C_xH_{2x}$ mit x = 2, 3, 4 oder 5 oder $CH_2CH(C_6H_5)$ steht;
$\alpha$ für eine ganze Zahl von 1 bis 350 steht;
$R^9$ für H oder eine unverzweigte oder verzweigte $C_1$-$C_4$-Alkylgruppe steht;
n für 1, 2, 3 oder 4 steht; und
wobei jedes M unabhängig voneinander für H oder ein Kationäquivalent steht.

**9.** Additiv nach einem der vorhergehenden Ansprüche, wobei das polymere Dispergiermittel als Polyetherseitenkette zumindest eine Struktureinheit der allgemeinen Formeln (IIa), (IIb), (IIc) und/oder (IId) aufweist:

(IIa)

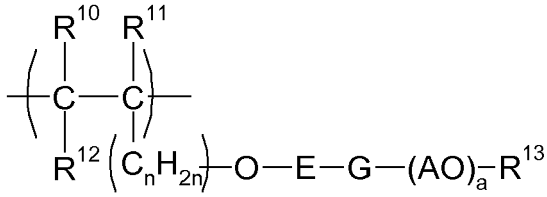

worin
$R^{10}$, $R^{11}$ und $R^{12}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht; G für O, NH oder CO-NH steht; oder
E und G gemeinsam für eine chemische Bindung stehen;
A für $C_xH_{2x}$ mit x = 2, 3, 4 oder 5 oder $CH_2CH(C_6H_5)$ steht;
n für 0, 1, 2, 3, 4 und/oder 5 steht;
a für eine ganze Zahl von 2 bis 350 steht;
$R^{13}$ für H, eine unverzweigte oder verzweigte $C_1$-$C_4$-Alkylgruppe, CO-$NH_2$ und/oder $COCH_3$ steht;

(IIb)

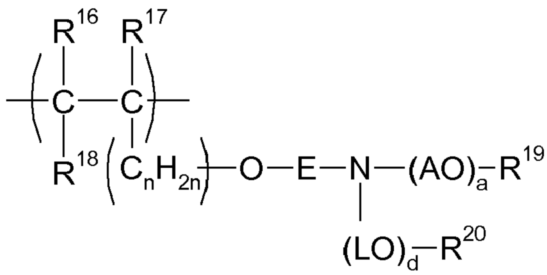

worin
$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;
A für $C_xH_{2x}$ mit x = 2, 3, 4 oder 5 oder $CH_2CH(C_6H_5)$ steht;
L für $C_xH_{2x}$ mit x = 2, 3, 4 oder 5 oder $CH_2$-$CH(C_6H_5)$ steht;
a für eine ganze Zahl von 2 bis 350 steht;
d für eine ganze Zahl von 1 bis 350 steht;
$R^{19}$ für H oder eine unverzweigte oder verzweigte $C_1$-$C_4$-Alkylgruppe steht;
$R^{20}$ für H oder eine unverzweigte $C_1$-$C_4$-Alkylgruppe steht; und
n für 0, 1, 2, 3, 4 oder 5 steht;

(IIc)

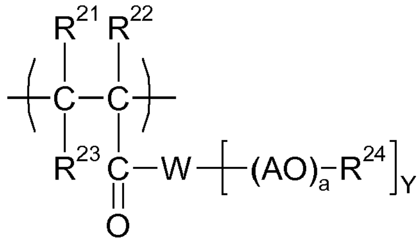

worin
$R^{21}$, $R^{22}$ und $R^{23}$ unabhängig voneinander für H oder eine unverzweigte oder verzweigte $C_1$-$C_4$-Alkylgruppe stehen;
W für O, $NR^{25}$, N steht
Y für 1 steht, wenn W = O oder $NR^{25}$, und für 2 steht, wenn W = N;
A für $C_xH_{2x}$ mit x = 2, 3, 4 oder 5 oder $CH_2CH(C_6H_5)$ steht;
a für eine ganze Zahl von 2 bis 350 steht;
$R^{24}$ für H oder eine unverzweigte oder verzweigte $C_1$-$C_4$-Alkylgruppe steht; $R^{25}$ für H oder eine unverzweigte oder verzweigte $C_1$-$C_4$-Alkylgruppe steht;

(IId)

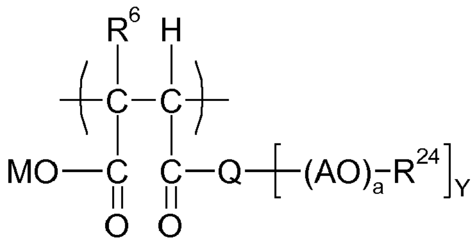

worin
$R^6$ für H oder eine unverzweigte oder verzweigte $C_1$-$C_4$-Alkylgruppe steht;
Q für $NR^{10}$, N oder O steht;
Y für 1 steht, wenn Q = O oder $NR^{10}$ und für 2 steht, wenn Q = N;
$R^{10}$ für H oder eine unverzweigte oder verzweigte $C_1$-$C_4$-Alkylgruppe steht;
$R^{24}$ für H oder eine unverzweigte oder verzweigte $C_1$-$C_4$-Alkylgruppe steht;
A für $C_xH_{2x}$ mit x = 2, 3, 4 oder 5, oder $CH_2C(C_6H_5)H$ steht; und
a für eine ganze Zahl von 2 bis 350 steht.

**10.** Additiv nach einem der vorhergehenden Ansprüche, wobei das polymere Dispergiermittel ein Polykondensationsprodukt umfassend Struktureinheiten (III) und (IV) ist:

(III)

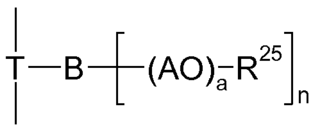

worin
T für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;

A für $C_xH_{2x}$ mit x = 2, 3, 4 oder 5 oder $CH_2CH(C_6H_5)$ steht;
a für eine ganze Zahl von 1 bis 300 steht;
$R^{25}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;
wobei die Struktureinheit (IV) ausgewählt ist unter den Struktureinheiten (IVa) und (IVb):

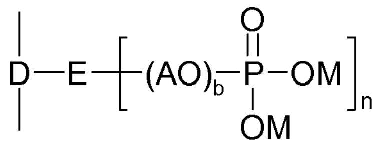

(IVa)

worin
D für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass n für 2 steht, wenn E für N steht und der Maßgabe, dass n für 1 steht, wenn E für NH oder O steht;
A für $C_xH_{2x}$ mit x = 2, 3, 4 oder 5 oder $CH_2CH(C_6H_5)$ steht;
b für eine ganze Zahl von 1 bis 300 steht;
M unabhängig voneinander für H oder ein Kationäquivalent stehen;

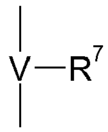

(IVb)

worin
V für einen substituierten oder unsubstituierten Phenyl- oder Naphthylrest steht und gegebenenfalls durch 1 oder zwei Reste substituiert ist, die ausgewählt sind unter $R^8$, OH, $OR^8$, $(CO)R^8$, COOM, $COOR^8$, $SO_3R^8$ und $NO_2$;
$R^7$ für COOM, $OCH_2COOM$, $SO_3M$ oder $OPO_3M_2$ steht;
M für H oder ein Kationäquivalent steht; und
$R^8$ für $C_1$-$C_4$-Alkyl, Phenyl, Naphthyl, Phenyl-$C_1$-$C_4$-alkyl oder $C_1$-$C_4$-Alkylphenyl steht.

**11.** Additiv nach einem der vorhergehenden Ansprüche, dadurch erhältlich, dass man das Salz des mehrwertigen Metallkations in Gegenwart des polymeren Dispergiermittels fällt, um eine kolloid-disperse Zubereitung des Salzes zu erhalten oder
dadurch erhältlich, dass man ein frisch gefälltes Salz des mehrwertigen Metallkations in Gegenwart des polymeren Dispergiermittels dispergiert, um eine kolloid-disperse Zubereitung des Salzes zu erhalten.

**12.** Additiv nach Anspruch 11, wobei man die kolloid-disperse Zubereitung mit einem Neutralisierungsmittel versetzt.

**13.** Additiv nach einem der vorhergehenden Ansprüche, dadurch erhältlich, dass man ein Hydroxid und/oder Oxid des mehrwertigen Metallkations mit einer Säure peptisiert, um eine kolloid-disperse Zubereitung des Salzes des mehrwertigen Metallkations zu erhalten.

**14.** Verfahren zur Herstellung des Additivs für hydraulisch abbindende Massen nach einem der Ansprüche 1 bis 13, wobei man das Salz des mehrwertigen Metallkations in Gegenwart des polymeren Dispergiermittels fällt, um eine kolloid-disperse Zubereitung des Salzes zu erhalten oder
wobei man ein frisch gefälltes Salz des mehrwertigen Metallkations in Gegenwart des poly-meren Dispergiermittels dispergiert, um eine kolloid-disperse Zubereitung des Salzes zu erhalten.

**15.** Verwendung des Additivs nach einem der Ansprüche 1 bis 13 als Slump-retainer in wasserhaltigen Baustoffmischungen, die ein hydraulisches Bindemittel enthalten.

**16.** Verwendung nach Anspruch 15, wobei das hydraulische Bindemittel ausgewählt ist unter (Portland)zement, Hüttensand, Flugasche, Silikastaub, Metakaolin, natürlichen Puzzolanen, gebranntem Ölschiefer, Calcium-Aluminat-Zement und Mischungen zweier oder mehrerer dieser Komponenten.

**17.** Baustoffmischung, umfassend ein Additiv nach einem der Ansprüche 1 bis 13 und ein Bindemittel, ausgewählt unter (Portland)zement, Hüttensand, Flugasche, Silikastaub, Metakaolin, natürlichen Puzzolanen, gebranntem Ölschiefer, Calcium-Aluminat-Zement und Gemischen davon.

Europäisches Patentamt
European Patent Office
Office européen des brevets

# EUROPÄISCHER RECHERCHENBERICHT

Nummer der Anmeldung
EP 13 15 6752

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 412 689 A2 (SILKROAD C & T CO LTD [KR]) 1. Februar 2012 (2012-02-01)<br>* Ansprüche 1-21; Beispiele 1-6 *<br>----- | 1-17 | INV.<br>C04B24/26<br>C04B28/02<br>C08F290/06 |
| A,D | US 7 879 146 B2 (RAKI LAILA [CA] ET AL) 1. Februar 2011 (2011-02-01)<br>* Ansprüche 1-17; Beispiele 1-4 *<br>----- | 1-17 | |
| A,D | WO 00/48961 A1 (MBT HOLDING AG [CH]; YAGUCHI MINORU [JP]; NAGAMINE HIDENORI [JP]; KANE) 24. August 2000 (2000-08-24)<br>* Ansprüche 1-11; Beispiele 1-15 *<br>----- | 1-17 | |
| A,D | WO 2010/029117 A2 (CONSTR RES & TECH GMBH [DE]; LORENZ KLAUS [DE]; KRAUS ALEXANDER [DE];) 18. März 2010 (2010-03-18)<br>* Ansprüche 1-30; Beispiele 1-29 *<br>----- | 1-17 | |
| A,D | EP 1 136 508 A1 (SIKA AG [CH]) 26. September 2001 (2001-09-26)<br>* Ansprüche 1-13; Tabellen 1-5 *<br>----- | 1-17 | RECHERCHIERTE SACHGEBIETE (IPC)<br>C04B<br>C08F |

Der vorliegende Recherchenbericht wurde für alle Patentansprüche erstellt

| Recherchenort | Abschlußdatum der Recherche | Prüfer |
|---|---|---|
| Den Haag | 11. Juli 2013 | Burtan, M |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 15 6752

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-07-2013

| Im Recherchenbericht angeführtes Patentdokument | Datum der Veröffentlichung | Mitglied(er) der Patentfamilie | Datum der Veröffentlichung |
|---|---|---|---|
| EP 2412689 A2 | 01-02-2012 | BR PI1103482 A2 | 11-12-2012 |
| | | CN 102424542 A | 25-04-2012 |
| | | EP 2412689 A2 | 01-02-2012 |
| | | KR 20120010336 A | 03-02-2012 |
| | | SG 177829 A1 | 28-02-2012 |
| | | US 2012046393 A1 | 23-02-2012 |
| US 7879146 B2 | 01-02-2011 | CA 2554347 A1 | 01-02-2007 |
| | | US 2007022916 A1 | 01-02-2007 |
| | | US 2011083586 A1 | 14-04-2011 |
| WO 0048961 A1 | 24-08-2000 | AU 771540 B2 | 25-03-2004 |
| | | CA 2360412 A1 | 24-08-2000 |
| | | CN 1340036 A | 13-03-2002 |
| | | EP 1152995 A1 | 14-11-2001 |
| | | JP 4394765 B2 | 06-01-2010 |
| | | JP 2000233957 A | 29-08-2000 |
| | | KR 20010108218 A | 07-12-2001 |
| | | MX 234484 B | 16-02-2006 |
| | | NZ 514196 A | 25-06-2004 |
| | | TR 200102352 T2 | 21-01-2002 |
| | | US 6762220 B1 | 13-07-2004 |
| | | WO 0048961 A1 | 24-08-2000 |
| WO 2010029117 A2 | 18-03-2010 | AU 2009290847 A1 | 18-03-2010 |
| | | CA 2736307 A1 | 18-03-2010 |
| | | CN 102149737 A | 10-08-2011 |
| | | EP 2334708 A2 | 22-06-2011 |
| | | JP 2012505812 A | 08-03-2012 |
| | | RU 2011113835 A | 20-10-2012 |
| | | US 2011166261 A1 | 07-07-2011 |
| | | WO 2010029117 A2 | 18-03-2010 |
| EP 1136508 A1 | 26-09-2001 | CA 2342011 A1 | 22-09-2001 |
| | | DE 1136508 T1 | 18-04-2002 |
| | | EP 1136508 A1 | 26-09-2001 |
| | | ES 2164618 T1 | 01-03-2002 |
| | | GR 2001300069 T1 | 31-12-2001 |
| | | JP 5052715 B2 | 17-10-2012 |
| | | JP 2001316152 A | 13-11-2001 |
| | | US 2002007019 A1 | 17-01-2002 |
| | | US 2004127607 A1 | 01-07-2004 |
| | | US 2007032599 A1 | 08-02-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009004348 A
- JP 57067057 A
- EP 1136508 A1
- WO 2010029117 A
- WO 2000048961 A
- US 7879146 B2
- EP 2412689 A
- EP 12177399 A
- EP 0894811 A
- EP 1851256 A
- EP 2463314 A
- EP 0753488 A
- WO 2006042709 A
- WO 2010026155 A
- DE 102004050395


### In der Beschreibung aufgeführte Nicht-Patentliteratur


- **J. PLANK et al.** *Cem. Conr. Res.,* 2009, vol. 39, 1-5